# EUROPEAN PATENT APPLICATION

(11) **EP 4 683 131 A1**
(43) Date of publication of application: **21.01.2026**
(21) Application number: 24788899.3
(22) Date of filing: 06.03.2024
(51) Int. Cl.: H01R 13/627, H01R 13/625, H01R 13/24, H01R 13/629, G02B 6/38

(54) **CONNECTOR AND ELECTRONIC DEVICE COMPRISING SAME**

(30) Priority: 14.04.2023 KR 20230049484
(71) Applicant: Samsung Electronics Co., Ltd., Suwon-si, Gyeonggi-do 16677 (KR)
(72) Inventor: YU, Sangbong, Suwon-si Gyeonggi-do 16677 (KR)
(74) Representative: Gulde & Partner
(86) International application number: PCT/KR2024/002896
(87) International publication number: WO 2024/214955

(57) **Abstract**

This connector may comprise: a receptacle comprising a first fastening portion and a hole positioned to surround ports for a plurality of cables; an inner shell connected to the receptacle; and an outer shell connected to the receptacle by surrounding the inner shell. The inner shell may comprise a first portion comprising a first opening connected to the hole of the receptacle, a second portion comprising a plurality of second openings through which the plurality of cables pass, and a third portion in which the plurality of cables are arranged. The third portion may comprise a third opening through which the plurality of cables are exposed to the outside of the inner shell. The outer shell may comprise a second fastening portion which moves, relative to the outer shell, to be coupled with the first fastening portion so that the outer shell is fastened to the receptacle or to be spaced apart from the first fastening portion so that the outer shell can be separated from the receptacle.

## Description

### [Technical Field]

The present disclosure relates to a connector and an electronic device including the same.

### [Background Art]

An electronic device may be connected to another electronic device. For example, the electronic device may be connected to the other electronic device through a wireless communication method. For example, the electronic device may be connected to the other electronic device through a wired communication method. A component or a system for the connection between the electronic device and the other electronic device may be referred to as an interface.

### [Disclosure]

### [Technical Solution]

In embodiments, a connector may comprise a receptacle including a first fastening portion, and a hole located to surround ports for a plurality of cables. The connector may comprise an inner shell connected with the receptacle. The connector may comprise an outer shell connected with the receptacle by surrounding the inner shell. The inner shell may include a first portion including a first opening connected with the hole of the receptacle, a second portion including a plurality of second openings through which the plurality of cables pass, and a third portion between the first portion and the second portion, the third portion in which the plurality of cables are disposed inside. The third portion may include a third opening in which the plurality of cables are exposed to the outside of the inner shell. The outer shell may include a second fastening portion spaced apart from the first fastening portion such that the outer shell is separated from the receptacle or coupled with the first fastening portion such that the outer shell is fastened to the receptacle by moving with respect to the outer shell.

In embodiments, an electronic device for a base station may comprise an apparatus for a digital unit (DU). The electronic device for the base station may comprise an apparatus for a radio unit (RU). The electronic device for the base station may comprise a connector for a connection between the DU and the RU. The connector may include a receptacle including a first fastening portion, and a hole located to surround ports for a plurality of cables. The connector may include an inner shell connected with the receptacle. The connector may include an outer shell connected with the receptacle by surrounding the inner shell. The inner shell may include a first portion including a first opening connected with the hole of the receptacle, a second portion including a plurality of second openings through which the plurality of cables pass, and a third portion between the first portion and the second portion, the third portion in which the plurality of cables are disposed inside. The third portion may include a third opening in which the plurality of cables are exposed to the outside of the inner shell. The outer shell may include a second fastening portion spaced apart from the first fastening portion such that the outer shell is separated from the receptacle or coupled with the first fastening portion such that the outer shell is fastened to the receptacle by moving with respect to the outer shell.

### [Description of the Drawings]

FIG. 1 illustrates an example of a wireless communication system.
FIG. 2 illustrates an example of network entities according to a distributed deployment.
FIGS. 3A and 3B illustrate an example of an electronic device including a plurality of ports.
FIG. 3C illustrates examples of a cable.
FIG. 4 illustrates an example of a method for separating a cable coupled with a port.
FIG. 5A illustrates an example of a coupled state of a dual layer connector for a plurality of cables.
FIG. 5B illustrates an example of a separated state of a dual layer connector for a plurality of cables.
FIG. 5C illustrates an example of a connection state between a plurality of cables and a plurality of ports inside a dual layer connector in a coupled state.
FIGS. 6A and 6B illustrate an example of a dual layer connector.
FIG. 7 illustrates an example of a receptacle and ports located in a hole of the receptacle.
FIGS. 8A to 8C illustrate an example of a method for connecting a plurality of cables with a plurality of ports using a dual layer connector.
FIG. 9A illustrates an example of a method for separating a plurality of cables, connected using a dual layer connector, from a plurality of ports.
FIG. 9B illustrates an example of a method for coupling and separating between a first fastening portion of a receptacle and a second fastening portion of an outer shell.
FIG. 10A illustrates an example of a connector for a single cable and an arrangement state of one port corresponding to one cable.
FIG. 10B illustrates an example of a dual layer connector for a plurality of cables and an arrangement state of a plurality of ports corresponding to the plurality of cables.
FIGS. 11A and 11B illustrate examples of an installation space required for each of a connector for a single cable and a dual layer connector for a plurality of cables.

### [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

Terms referring to a signal (e.g., signal, information, message, signaling, and/or data), terms for a calculation state (e.g., step, operation, and/or procedure), terms referring to data (e.g., packet, user stream, information, and/or bit), a component of an electronic device (e.g., connector, cable, port, outer shell, inner shell, and/or receptacle), and terms referring to a connecting portion between components (e.g., fastening portion) used in the following description are exemplified for convenience of description. Therefore, the present disclosure is not limited to terms to be described below, and another term having an equivalent technical meaning may be used.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B). Hereinafter, 'C' and/or 'D' means including at least one of 'C' or 'D', that is, {'C', 'D', and 'C' and 'D'}.

The present disclosure describes embodiments using terms used in some communication standards (e.g., 3rd Generation Partnership Project (3GPP)), but this is merely an example for description. Embodiments of the present disclosure may also be applied to other communication and broadcasting systems.

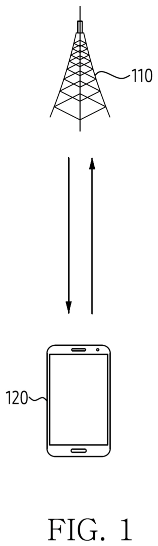

FIG. 1 illustrates an example of a wireless communication system.

Referring to FIG. 1, FIG. 1 illustrates a base station 110 and a terminal 120 as a portion of nodes that utilize a wireless channel in a wireless communication system. FIG. 1 illustrates only one base station, but a wireless communication system may further include another base station that is identical or similar to the base station 110.

The base station 110 is a network infrastructure that provides wireless access to the terminal 120. The base station 110 has coverage defined based on a distance at which a signal may be transmitted. In addition to 'base station', the base station 110 may be referred to as an 'access point (AP)', 'eNodeB (eNB)', '5th generation node', 'next generation nodeB (gNB)', 'wireless point', 'transmission/reception point (TRP)' or other terms having equivalent technical meanings.

The terminal 120, which is a device used by a user, performs communication with the base station 110 through a wireless channel. A link from the base station 110 to the terminal 120 is referred to as a downlink (DL), and a link from the terminal 120 to the base station 110 is referred to as an uplink (UL).

In addition, although not illustrated in FIG. 1, the terminal 120 and another terminal may perform communication with each other through a wireless channel. In this case, a device-to-device link (D2D) between the terminal 120 and the other terminal is referred to as a sidelink, and the sidelink may be used interchangeably with a PC5 interface. In some other embodiments, the terminal 120 may operate without user involvement. According to an embodiment, the terminal 120 may be a device that performs machine type communication (MTC), and may not be carried by a user. In addition, according to an embodiment, the terminal 120 may be a Narrowband (NB)-Internet of Things (IoT) device.

In addition to 'terminal', the terminal 120 may also be referred to as 'user equipment (UE) ', 'customer premises equipment, (CPE) ', 'mobile station', 'subscriber station', 'remote terminal', 'wireless terminal', 'electronic device', 'user device', or other terms having equivalent technical meanings.

The base station 110 may perform beamforming with the terminal 120. The base station 110 and the terminal 120 may transmit and receive a wireless signal in a relatively low frequency band (e.g., frequency range 1 (FR 1) of NR). In addition, the base station 110 and the terminal 120 may transmit and receive a wireless signal in a relatively high frequency band (e.g., FR 2 (or FR 2-1, FR 2-2, FR 2-3) or FR 3), and a mmWave band (e.g., 28GHz, 30GHz, 38GHz, 60GHz). The base station 110 and the terminal 120 may perform beamforming to improve a channel gain. Herein, the beamforming may include transmission beamforming and reception beamforming. The base station 110 and the terminal 120 may provide directivity to a transmission signal or a reception signal. To this end, the base station 110 and the terminal 120 may select serving beams through a beam search or beam management procedure.

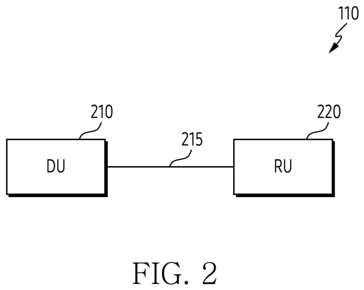

Conventionally, in a communication system with a relatively large cell radius of base station, each base station was installed to include a function of a digital processing unit (or distributed unit (DU)) and a radio frequency (RF) processing unit (or radio unit (RU)). However, as high frequency bands are used in 4^{th} generation (4G) and/or subsequent communication systems (e.g., 5G) and the cell coverage of base stations becomes smaller, the number of base stations to cover a specific area has increased. The burden of installation cost for operators to install base stations has also increased. In order to minimize the installation cost of a base station, a structure in which the DU and RU of the base station are separated, one or more RUs are connected to one DU through a wired network, and one or more Rus geographically distributed to cover a specific area are deployed, has been proposed. Hereinafter, a deployment structure and expansion examples of a base station according to various embodiments of the present disclosure are described through FIG. 2.

FIG. 2 illustrates an example of network entities according to a distributed deployment. For example, the network entities may include a digital unit (DU) 210 and a radio unit (RU) 220 (or a massive multiple input multiple output (MMU) unit). For example, the network entities may be connected through a fronthaul. The fronthaul refers to a connection between entities (e.g., the DU 210, and the RU 220) between a wireless LAN and a base station 110, unlike a backhaul between the base station 110 and a core network.

In FIG. 2, an example of a fronthaul structure between the DU 210 and one RU 220 is illustrated, but this is merely for convenience of description, and the present disclosure is not limited thereto. In other words, an embodiment of the present disclosure may also be applied to a fronthaul structure between one DU and a plurality of RUs. For example, an embodiment of the present disclosure may be applied to a fronthaul structure between one DU and two RUs. In addition, an embodiment of the present disclosure may also be applied to a fronthaul structure between one DU and three RUs.

Referring to FIG. 2, the base station 110 may include a DU 210 and an RU 220. A fronthaul 215 between the DU 210 and the RU 220 may be operated via an Fx interface. For operation of the fronthaul 215, an interface such as an enhanced common public radio interface (eCPRI) or radio over ethernet (ROE) may be used. According to an implementation example, the DU 210 may be referred to not only as a digital unit (DU), but also as a baseband unit (BBU), a digital BBU, a baseband digital unit, a digital processing unit, digital processing circuitry, baseband processing circuitry, a baseband processing unit, and/or other technically equivalent terms. According to an implementation example, the RU 220 may be referred to not only as a radio unit (RU), but also as a remote unit, a remote radio head (RRH), radio processing circuitry, a radio processing unit, an antenna-integrated radio, an air radio device, an air scale communication device, a radio device, a radio communication device, and/or other technically equivalent terms. In addition, according to an implementation example, although a network entity connected to the DU 210 is described as the RU 220 in the present disclosure, of course, a massive multiple input multiple output (MMU) unit may be connected to the DU 210 instead of the RU 220 and used.

As communication technology has been developed, mobile data traffic increased, and thus the bandwidth demand required in a fronthaul between a digital unit and a radio unit has increased significantly. In a deployment such as centralized/cloud radio access network (C-RAN), the DU may be implemented to perform functions for packet data convergence protocol (PDCP), radio link control (RLC), media access control (MAC), and physical (PHY), and the RU may be implemented to further perform functions for PHY layer in addition to a radio frequency (RF) function.

The DU 210 may be in charge of upper layer functions of a wireless network. For example, the DU 210 may perform functions of the MAC layer and a part of the PHY layer. Herein, a part of the PHY layer is a function performed at a higher level among the functions of the PHY layer, and may include, for example, channel encoding (or channel decoding), scrambling (or descrambling), modulation (or demodulation), and layer mapping (or layer demapping). According to an embodiment, if the DU 210 complies with an O-RAN standard, it may be referred to as an O-RAN DU (O-DU). The DU 210 may be replaced with and represented as a first network entity for a base station (e.g., gNB) in embodiments of the present disclosure, as needed.

The RU 220 may be in charge of lower layer functions of a wireless network. For example, the RU 220 may perform a part of the PHY layer, and a RF function. Herein, a part of the PHY layer is a function performed at performed at a relatively lower level than the DU 210 among the functions of the PHY layer, and may include, for example, iFFT conversion (or FFT conversion), cyclic prefix (CP) insertion (or CP removal), and digital beamforming. The RU 220 may be referred to as access unit (AU), access point (AP), transmission/reception point (TRP), remote radio head (RRH), radio unit (RU), or other terms having equivalent technical meanings. According to an embodiment, if the RU 220 complies with the O-RAN standard, it may be referred to as an O-RAN RU (O-RU). The RU 220 may be replaced with and represented as a second network entity for a base station (e.g., gNB) in embodiments of the present disclosure, as needed.

Although FIG. 2 describes that the base station 110 includes the DU 210 and the RU 220, the embodiments of the present disclosure are not limited thereto. The base station according to the embodiments may be implemented in a distributed deployment according to a centralized unit (CU) configured to perform functions of upper layers (e.g., packet data convergence protocol (PDCP), radio resource control (RRC)) of an access network and a distributed unit (DU) configured to perform functions of lower layers. As an example, the digital unit (DU) 210 may be implemented by being separated into a centralized unit (CU) and a distributed unit (DU). Between a core (e.g., 5G core (5GC) or next generation core (NGC)) network and a radio access network (RAN), the base station may be implemented in a structure in which CU, DU, and RU are arranged in order. An interface between the CU and the distributed unit (DU) may be referred to as an F1 interface.

A centralized unit (CU) may be in charge of functions of a higher layer than the DU (distributed unit), by being connected to one or more distributed units (DUs). For example, the CU may be in charge of radio resource control (RRC) and a function of a packet data convergence protocol (PDCP) layer, and the DU and the RU may be in charge of functions of lower layers. The DU may perform radio link control (RLC), media access control (MAC), and some functions (high PHY) of PHY layer, and the RU may perform remaining functions (low PHY) of the PHY layer. In addition, as an example, a digital unit (DU) may be included in a distributed unit (DU) according to the implementation of distributed deployment of the base station. Hereinafter, unless otherwise defined, it is described as operations of the digital unit (DU) and the RU, but various embodiments of the present disclosure may be applied to both of a base station arrangement including the CU or an arrangement where the DU is directly connected to a core network (i.e., the CU and the DU are integrated into a base station (e.g., NG-RAN node) which is a single entity).

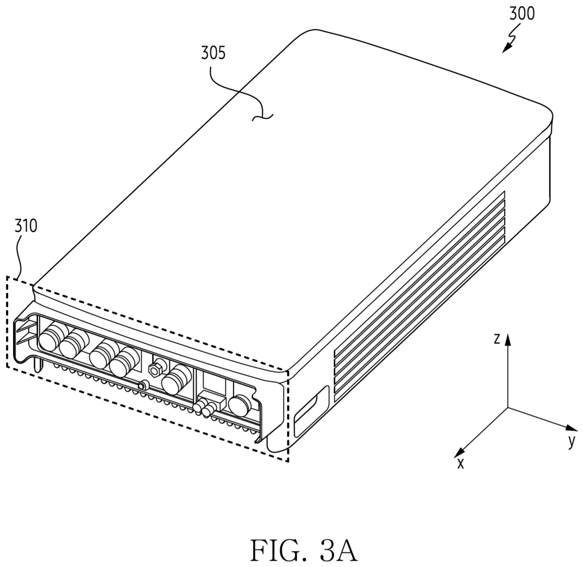

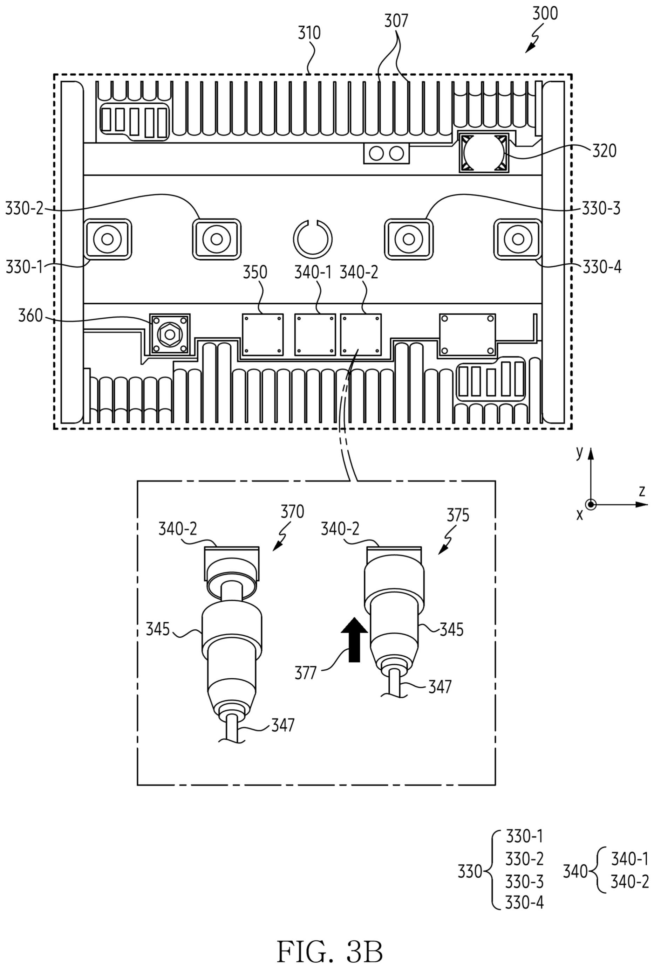

Referring to FIG. 2, the base station 110 may use an interface for a fronthaul 215 connection between the DU 210 and the RU 220. For example, the interface may include a cable. For example, the cable may include a signaling cable. The RU 220 may be connected with the DU 210 through the signaling cable to perform signaling from the DU 210. For example, a case of the RU 220 may include a port for the signaling cable. The case may be referred to as a housing. An example of a plurality of ports included in the RU 220 is specifically described in FIGS. 3A and 3B below.

FIGS. 3A and 3B illustrate an example of an electronic device including a plurality of ports. The electronic device 300 of FIGS. 3A and 3B may include the base station 110 of FIG. 1 or an apparatus for the base station 110. For example, the electronic device 300 may include the RU 220 (or a MMU) of FIG. 2 or an apparatus for the RU 220.

For convenience of description, the present disclosure hereinafter illustrates the electronic device 300, which is an example of an apparatus of the base station 110 or the RU 220 (or the MMU), but an embodiment of the present disclosure is not limited thereto. For example, the electronic device 300 may include an apparatus that may be installed outdoors. For example, an embodiment of the present disclosure may also be applied to a connector used for a port included in the electronic device 300 to be installed outdoors and a cable to be connected to the port, and the electronic device including the same.

Referring to FIG. 3A, the electronic device 300 may include a case 305. For example, the electronic device 300 may be configured as the case 305. For example, the case 305 may form the exterior of the electronic device 300. As described above, the case 305 may be referred to as a housing. For example, the case 305 may be referred to as a housing of the electronic device 300. For example, the electronic device 300 may be disposed outdoors. For example, the electronic device 300 may include an apparatus that is installed outdoors.

For example, the electronic device 300 may include a plurality of ports. FIG. 3B may be referenced to describe an example of the plurality of ports mounted on the case 305 of the electronic device 300. For example, FIG. 3B may indicate an example of a region 310 of the case 305 of FIG. 3A viewed from a +x axis direction. The region 310 may indicate a virtual region for the case 305 on a yz plane.

Referring to FIG. 3B, an example of a side of the case 305, when the electronic device 300 is viewed in the +x axis direction of FIG. 3A, is illustrated. For example, the electronic device 300 may include a plurality of fins 307. For example, a portion of the case 305 may include the plurality of fins 307. The portion may include a side facing a +y axis direction of the case 305 or another side facing a -y axis direction. The plurality of fins 307 may be a structure for dissipating heat generated by a component inside the electronic device 300. For example, the component may include a processor included in the electronic device 300.

For example, a plurality of ports may be disposed in a side parallel to the region 310 of the case 305. For example, the plurality of ports may include signaling ports 340, 350, and 360, a power port 320, and radio frequency (RF) ports 330. For example, the signaling ports 340, 350, and 360 may include optical ports 340 corresponding to optic cables, a UDA port 350 corresponding to a cable for ethernet connection, and a RET port 360 corresponding to a remote electrical tilt (RET) cable. For example, the optical ports 340 may include a first optical port 340-1 corresponding to a first optic cable and a second optical port 340-2 corresponding to a second optic cable. For example, the power port 320 may indicate a port corresponding to a cable for supplying power. For example, the RF ports 330 may indicate ports corresponding to cables for connection with an antenna. For example, the RF ports 330 may include a first RF port 330-1, a second RF port 330-2, a third RF port 330-3, and a fourth RF port 330-4.

Although FIG. 3B illustrates two optical ports 340 and four RF ports 330, the number of a plurality of ports included in the electronic device 300 is not limited to an example illustrated in FIG. 3B. For example, the electronic device 300 may include three optical ports or one optical port. In addition, the electronic device 300 may include three or less RF ports or five or more RF ports. In addition, the electronic device 300 may include other types of ports or may include fewer of some of the ports illustrated in FIG. 3B. In addition, a structure of each of the plurality of ports illustrated in FIG. 3B is merely exemplary, and an embodiment of the present disclosure is not to be interpreted as being limited to the structure of FIG. 3B.

Referring to the above description, the plurality of ports illustrated in FIG. 3B may correspond to a plurality of cables. The correspondence of the plurality of ports to the plurality of cables may include that a type (or a structure) of the plurality of ports is determined based on a type (or a structure) of the plurality of cables, and that a port and a cable of the same or a compatible type may be connected to each other.

The plurality of cables may include various types of cables. For example, the plurality of cables may include a signaling cable, a power cable, or a radio frequency (RF) cable. The signaling cable may include a cable for performing signaling with the electronic device 300 and another electronic device (not illustrated). For example, the other electronic device may include the DU 210 of FIG. 2. For example, the signaling cable may include an optic cable, a RET cable, and a UDA cable. However, an embodiment of the present disclosure is not limited thereto, and the signaling cable of the present disclosure may also be applied to another type of cable for signaling. The power cable may include a cable for supplying power to the electronic device 300. For example, the power cable may include a direct current (DC) power cable. However, an embodiment of the present disclosure is not limited thereto, and the power cable of the present disclosure may also be applied to another type of cable for power supply. The RF cable may include a cable for connecting the electronic device 300 with an antenna for transmitting and receiving a signal. The signal may include an RF signal. However, an embodiment of the present disclosure is not limited thereto, and the RF cable of the present disclosure may also be applied to another type of cable used for transmitting and receiving a signal.

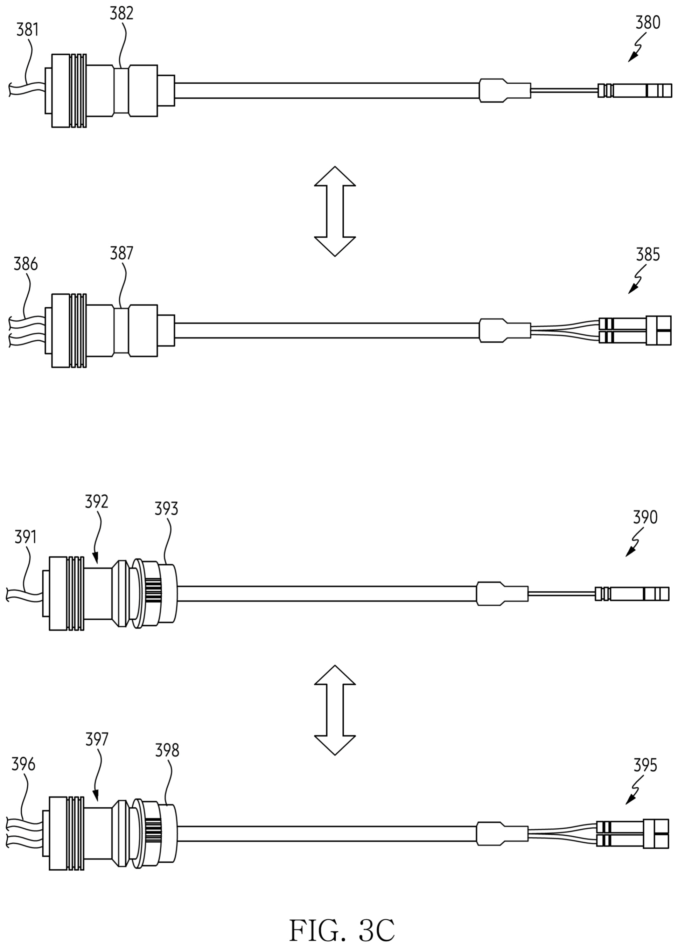

In the example described above, a cable may be connected with a port for the cable through a connector. Referring to an example 370, an optic cable 347 corresponding to the second optical port 340-2 may be in a state of being separated from the second optical port 340-2. Referring to an example 375, the optic cable 347 may be connected with the second optical port 340-2 through a connector 345. For example, as the connector 345 moves in a direction 377, the optic cable 347 may be connected with the second optical port 340-2. FIG. 3C below illustrates examples of a cable according to a connection method between a cable and a port.

FIG. 3C illustrates examples of a cable. Examples 380, 385, 390, and 395 of cables of FIG. 3C may indicate an example of optic cables connected with the optical ports 330 of FIG. 3B.

For example, an example 380 and an example 385 may indicate an example in which a connector for connecting with a port corresponding to a cable is integrally configured with the cable. Referring to the example 380, a cable 381 may be manufactured in a state in which a connector 382 is assembled integrally. Referring to the example 385, a cable 386 may be manufactured in a state in which a connector 387 is assembled integrally. Unlike the cable 381 including one connection portion, the cable 386 may include two connection portions. In other words, each of the cables 381 and 386 may be referred to as one configuration including a connector.

In contrast, the example 390 and the example 395 may indicate an example in which a connector for connecting with a port corresponding to a cable is separately configured with the cable. Referring to the example 390, a cable 391 may be manufactured in a state of being separable from a connector 392 and a fastening portion 393 for fastening with the connector 392. Referring to the example 395, a cable 396 may be manufactured in a state of being separable from a connector 397 and a fastening portion 398 for fastening with the connector 397. In other words, the cable 391 or the cable 396 may be connected with a port (e.g., the second optical port 340-2) through assembly of the connector 392 and the fastening portion 393 or the connector 397 and the fastening portion 398 in an installation process in an electronic device (e.g., the electronic device 300 of FIGS. 3A and 3B). Unlike the cable 391 including one connection portion, the cable 396 may include two connection portions.

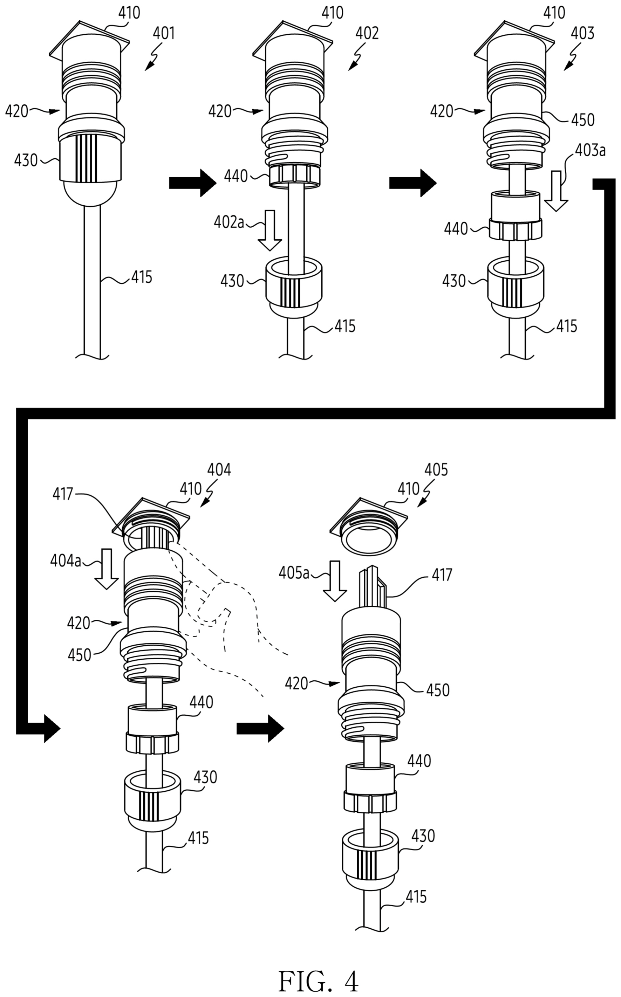

FIG. 4 below illustrates an example of a method for separating the cable of the example 390 or the example 395 in a state of being connected to a port.

FIG. 4 illustrates an example of a method for separating a cable coupled with a port. The port of FIG. 4 may include the second optical port 340-2 of FIG. 3B. A cable 415 of FIG. 4 may include the cable 391 of FIG. 3C. For example, a connector 420 of FIG. 4 may include the connector 392 of FIG. 3C. For example, a fastening portion 430 of FIG. 4 may include the fastening portion 393 of FIG. 3C.

Referring to FIG. 4, examples 401, 402, 403, 404, and 405 illustrating a method for separating the cable 415 connected with the port (not illustrated) in order are illustrated.

Referring to an example 401, the cable 415 may be in a state of being connected with a receptacle 410 through the connector 420. The receptacle 410 may be referred to as a socket. For example, the receptacle 410 may be connected with an electronic device (e.g., an electronic device 300 or a case 305) such that the port is located in a hole included in the receptacle 410. For example, the receptacle 410 may be fastened to the electronic device through a connecting member. For example, the connecting member may include a screw, a pin, or a bolt and a nut, and the like. The receptacle 410 may be included in the connector 420 as a component of the connector 420. For example, the fastening portion 430 for fastening the connector 420 and the cable 415 may be maintained in a fastened state with respect to the connector 420.

Referring to an example 402, fastening between the fastening portion 430 and the connector 420 may be released by rotating in a specific direction (e.g., clockwise). The fastening portion 430 may be rotated in the specific direction and moved along the cable 415 in a direction 402a. Accordingly, a fixing portion 440 of the connector 420 may be exposed in a state of being visible from the outside.

Referring to an example 403, by moving the fixing portion 440 along the cable 415 in a direction 403a, a connecting portion 450 of the connector 420 may be changed to be movable. For example, as the fixing portion 440 is moved in the direction 403a in a state in which the connecting portion 450 is fixed to the receptacle 410 by the fixing portion 440, the connecting portion 450 may be changed to a state of being movable in the receptacle 410.

Referring to an example 404, as the connecting portion 450 is moved in a direction 404a, the connector 420 may be spaced apart from the receptacle 410. In addition, a fastening portion 417 of the cable 415 may be exposed in a state of being visible from the outside. For example, the fastening portion 417 may be referred to as a latch. The fastening portion 417 may be in a state of being fastened to the port located inside the hole of the receptacle 410.

Referring to an example 405, by releasing the fastening between the fastening portion 417 and the port, the cable 415 may be separated from the port. As the cable 415, with the fastening released, is moved in a direction 405a, the cable 415 may be spaced apart from the port. Accordingly, a connection between the cable 415 and the port may be fully released. For example, a meaning of being fully released may indicate not only that the cable 415 and the port are physically spaced apart, but also that a connection is electrically released.

Referring to the above description, in a case in which the fastening between the connecting portion 450 and the receptacle 410 and the fastening between the cable 415 and the port are not released according to the order of the example 401 to the example 405, the fastening portion 417 of the cable 415 may be damaged. For example, in a case in which an order of the example 401 to the example 402 is omitted and only the connecting portion 450 of the connector 420 is pulled in the direction 403a as in the example 403, the fastening portion 417 may be damaged. The damage to the fastening portion 417 may be due to the fastening of the fastening portion 430 not being released and the fixing portion 440 maintaining in a fixed state. In other words, as the connecting portion 450 of the connector 420, which is configured with a single layer, is pulled without considering the release order, a problem may exist in which the fastening portion 417 of the cable 415 is broken. In addition, as in FIG. 4, the connector 420 for the single cable 415 requires an installation space corresponding to one port. The installation space may be referred to as a space for installing the receptacle 410. A minimum spacing distance may be required between the port and another port (not illustrated). Accordingly, a size of the electronic device 300 or the case 305 may be increased. In addition, since the connector 420 (and the receptacle 410) is formed in a configuration dedicated to the cable 415, versatility that may be applied to various cables may be reduced.

Therefore, a connector configured with a dual layer (hereinafter, a dual layer connector) and an electronic device (e.g., a base station 110) including the same according to an embodiment of the present disclosure may prevent a configuration of a cable from being broken in a process of connecting the cable with the port and separating (or releasing) the cable from the port. In addition, by being used with respect to a plurality of cables, the dual layer connector according to an embodiment of the present disclosure may reduce a size of an electronic device (e.g., the electronic device 300 or the case 305) in which a port is disposed, compared to a case in which a separate connector is used for each of the cables. In addition, the dual layer connector according to an embodiment of the present disclosure may be applied regardless of a structure and a type of the cable, thereby securing versatility and improving productivity of the connector.

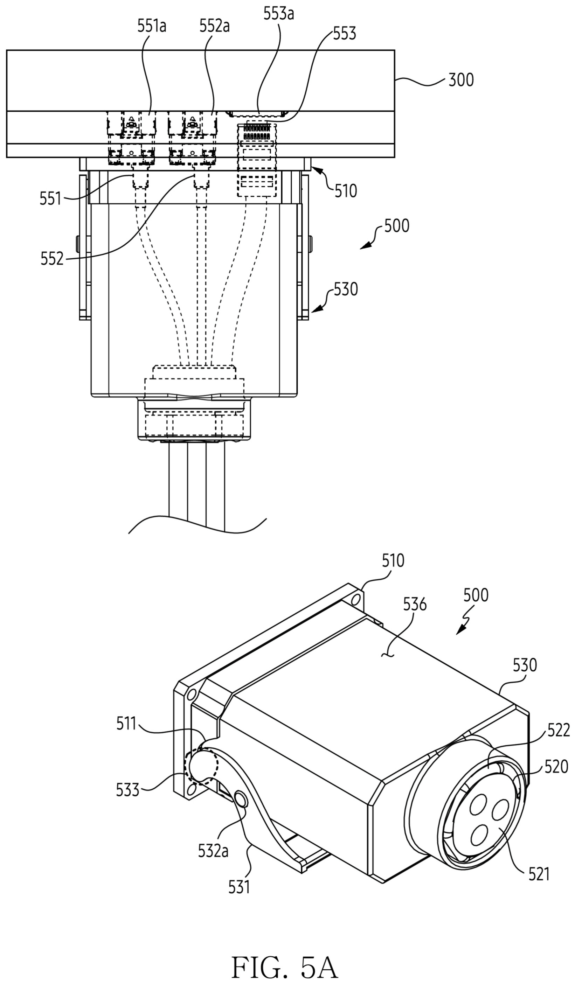

FIG. 5A illustrates an example of a coupled state of a dual layer connector for a plurality of cables.

The plurality of cables may include the plurality of cables corresponding to the plurality of ports of FIG. 3B. For example, the plurality of cables may include a signaling cable, a power cable, or a radio frequency (RF) cable. In the example of FIG. 5A, for convenience of description, an example of a plurality of signaling cables is illustrated. For example, FIG. 5A illustrates a first cable 551 and a second cable 552 which are optic cables, and a third cable 553, which is a UDA cable. However, an embodiment of the present disclosure is not limited thereto. An embodiment of the present disclosure may also be applied to another type of cable or to a different number of cables. The coupled state may indicate a state in which an inner shell 520 and an outer shell 530, which are configured with a dual layer of a dual layer connector 500 (hereinafter, a connector) of FIG. 5A, are fastened to a receptacle 510.

Referring to FIG. 5A, the connector 500 may indicate a connector for connecting the plurality of cables 551, 552, and 553 and ports 551a, 552a, and 553a of an electronic device 300. The electronic device 300 of FIG. 5A may include the electronic device 300 of FIG. 3A. For example, the electronic device 300 of FIG. 5A may be configured as a case (e.g., the case 305 of FIG. 3A). The ports 551a, 552a, and 553a may be included in a partial region of the case. The ports 551a, 552a, and 553a may be disposed in the partial region. For example, the partial region may include a surface of a side of the case. For example, the partial region may include a region extending inward from the surface.

For example, the plurality of cables 551, 552, and 553 may be fastened to the ports 551a, 552a, and 553a through the connector 500. For example, the first cable 551 may be fastened to the first port 551a. For example, the second cable 552 may be fastened to the second port 552a. In addition, the third cable 553 may be fastened to the third port 553a.

Referring to FIG. 5A, the connector 500 may include the receptacle 510, the inner shell 520, and the outer shell 530.

For example, the receptacle 510 may include a hole (not illustrated) and a first fastening portion 511. For example, in the coupled state, the ports 551a, 552a, and 553a may be located in an inner region (e.g., the hole) of the receptacle 510. In the coupled state, an inner surface of the receptacle 510 may be in contact with a portion of the inner shell 520 and a portion of the outer shell 530. For example, the inner surface may extend from a periphery of the hole. In the coupled state, the first fastening portion 511 may be coupled with a portion 533 of a second fastening portion 531 of the outer shell 530. For example, in the coupled state, the connector 500 may maintain a fastened state through the coupling of the first fastening portion 511 and the portion 533. In FIG. 5A, only the one first fastening portion 511 formed on a side of the receptacle 510 is illustrated, but another first fastening portion (not illustrated) may be formed on another side opposite to the side of the receptacle 510. For example, the receptacle 510 may comprise a conductive member.

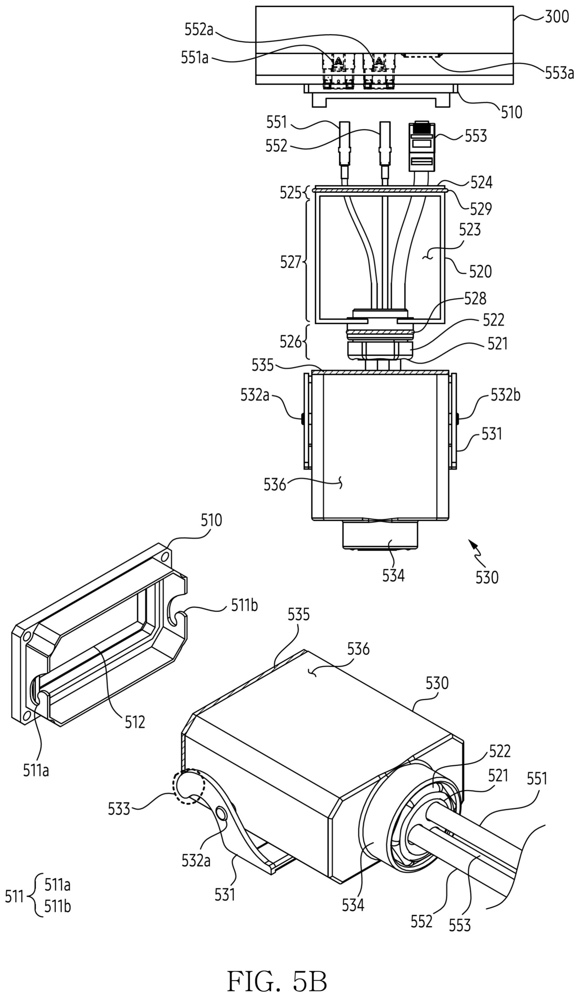

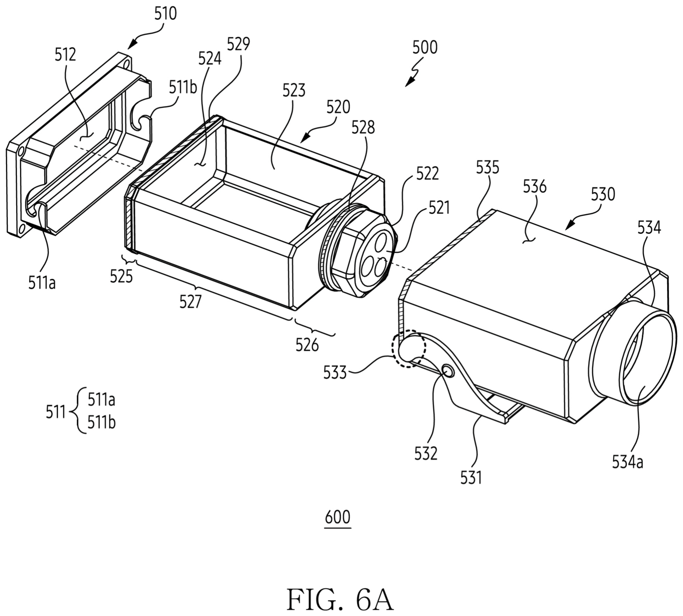

For example, the inner shell 520 may include a first portion (not illustrated) connected with the hole of the receptacle 510, a second portion including an elastic portion 521 through which the plurality of cables 551, 552, and 553 pass and a third fastening portion 522, and a third portion (not illustrated) between the first portion and the second portion. For example, in the coupled state, the inner shell 520 may be in a state of being inserted into the inside of the outer shell 530. A structure of the inner shell 520 is specifically described in FIGS. 5B and 6A, which illustrate a separated state of the connector 500.

For example, the elastic portion 521 may include a plurality of openings through which the plurality of cables 551, 552, and 553 may pass. In FIG. 5A, the plurality of openings include three openings through which the plurality of cables 551, 552, and 553 may pass, but an embodiment of the present disclosure is not limited thereto. For example, the plurality of openings may be determined based on the number of cables that may be used in the connector 500. The third fastening portion 522 may be rotated to fasten the plurality of cables 551, 552, and 553 that have passed through the plurality of openings of the elastic portion 521. For example, as the third fastening portion 522 rotates in a first rotation direction (e.g., clockwise), a size of each of the plurality of openings may be reduced. In contrast, as the third fastening portion 522 rotates in a second rotation direction (e.g., counter-clockwise) opposite to the first rotation direction, the size of each of the plurality of openings may be expanded. Based on the reduction, the plurality of cables 551, 552, and 553 may be fastened to the elastic portion 521. Based on the expansion, the fastening of the plurality of cables to the elastic portion 521 may be released.

For example, the elastic portion 521 may comprise an elastic member for the reduction and the expansion. For example, the elastic member may include rubber or silicone rubber. For example, the third fastening portion 522 may comprise a non-conductive member. For example, the non-conductive member may include dielectrics.

For example, the outer shell 530 may include the second fastening portion 531 and a housing 536. For example, the second fastening portion 531 may indicate a structure for coupling with the first fastening portion 511. For example, the second fastening portion 531 may be coupled with the first fastening portion 511 such that the outer shell 530 is fastened to the receptacle 510, by moving with respect to the outer shell 530 based on a fixing member 532a. Alternatively, the second fastening portion 531 may be spaced apart from the first fastening portion 511 such that the outer shell 530 is separated from the receptacle 510, by moving with respect to the outer shell 530 based on the fixing member 532a. For example, the fixing member 532a may operate as an axis or a center (or a reference) for the movement of the second fastening portion 531. In a case in which the second fastening portion 531 is coupled with the first fastening portion 511, the portion 533 of the second fastening portion 531 may be in contact with the first fastening portion 511. In FIG. 5A, only the one fixing member 532a formed on a portion of the second fastening portion 531 is illustrated, but another fixing member (not illustrated) may be formed on another portion opposite to the portion of the second fastening portion 531. For example, in the coupled state, the housing 536 may surround the inner shell 520. For example, the housing 536 may overlap with the inner shell 520 such that the inner shell 520 is inserted and only at least a portion (e.g., the elastic portion 521 and the third fastening portion 522) of the inner shell 520 is visible from the outside. For example, a shape of the housing 536 may be formed based on a shape of the inner shell 520.

FIG. 5A illustrates a structure of the first fastening portion 511 and the second fastening portion 531 according to a fixing method using a lever, but an embodiment of the present disclosure is not limited thereto. For example, the connector 500 may include a fully fasten structure including not only the fixing method using the lever, but also a push pull method or a bayonet method. The fully fasten structure may include a structure in which fastening is completed after an operation for fixation is performed. For example, the first fastening portion 511 and the second fastening portion 531, which are the fully fasten structure, may include at least one of a push pull connector, a lever, or a bayonet connector. Therefore, the structure of the first fastening portion 511 and the second fastening portion 531 (or the connector 500) is not to be interpreted as being limited to the structure of FIG. 5A.

FIG. 5B illustrates an example of a separated state of a dual layer connector for a plurality of cables.

The plurality of cables may include the plurality of cables corresponding to the plurality of ports of FIG. 3B. For example, the plurality of cables may include a signaling cable, a power cable, or a radio frequency (RF) cable. In the example of FIG. 5B, for convenience of description, an example of a plurality of signaling cables is illustrated. For example, FIG. 5B illustrates a first cable 551 and a second cable 552 which are optic cables, and a third cable 553, which is a UDA cable. However, an embodiment of the present disclosure is not limited thereto. An embodiment of the present disclosure may also be applied to another type of cable or to a different number of cables. The separated state may indicate a state in which an inner shell 520 and an outer shell 530, which are configured with a dual layer of a dual layer connector 500 of FIG. 5B, are spaced apart from a receptacle 510. For example, the connector 500 of FIG. 5B may indicate a state in which the connector 500 of FIG. 5A, which is in a coupled state, is spaced apart from an electronic device 300 after being released from fastening.

The connector 500 of FIG. 5B may be understood to be substantially the same as the connector 500 of FIG. 5A. The same reference numerals may be used for the same descriptions.

Referring to FIG. 5B, the connector 500 may include the receptacle 510, the inner shell 520, and the outer shell 530.

For example, the receptacle 510 may include a hole 512 and a first fastening portion 511. For example, even in a case of the connector 500 being in the separated state, the receptacle 510 may be connected with the electronic device 300. In this case, ports 551a, 552a, and 553a may be located in an inner region (e.g., the hole 512) of the receptacle 510. In the coupled state of FIG. 5A, an inner surface of the receptacle 510 may be in contact with a portion of the inner shell 520 and a portion of the outer shell 530. For example, the inner surface may extend from a periphery of the hole 512. In other words, the hole 512 may indicate an opening for connecting the ports 551a, 552a, and 553a with the plurality of cables 551, 552, and 553 by the inner shell 520 and the outer shell 530 being coupled with the receptacle 510 in a state of being in contact with the inner surface. The first fastening portion 511 may include two first fastening portions 511a and 511b. For example, a first fastening portion 511a may be formed on a side, and another first fastening portion 511b may be formed on another side opposite to the side of the receptacle 510.

For example, the inner shell 520 may include a first portion 525 connected with the hole 512 of the receptacle 510, a second portion 526, and a third portion 527 between the first portion 525 and the second portion 526.

For example, in a case in which the connector 500 is in the coupled state of FIG. 5A, the first portion 525 may include a first opening 524 to be located in the hole 512 of the receptacle 510. For example, in the separated state, the plurality of cables 551, 552, and 553 may pass through the first opening 524. In the coupled state of FIG. 5A, the plurality of cables 551, 552, and 553 and the ports 551a, 552a, and 553a may be located in the first opening 524. The first portion 525 may include a first connecting portion 529. For example, in the coupled state of FIG. 5A, the first connecting portion 529 may be a component configured to increase coupling force and prevent water from entering through a gap between the first portion 525 and the inner surface of the receptacle 510 when the first portion 525 is in contact with the inner surface. For example, the first connecting portion 529 may be formed of rubber or silicone rubber.

For example, the second portion 526 may include an elastic portion 521 through which the plurality of cables 551, 552, and 553 pass, and a third fastening portion 522. For example, the second portion 526 may include a portion of a housing extending from the third portion 527 to which the elastic portion 521 and the third fastening portion 522 are connected. For example, the housing may be a housing of the inner shell 520 and may comprise a non-conductive member. For example, the non-conductive member may be referred to as dielectrics. In addition, the second portion 526 may include a second connecting portion 528. For example, the second connecting portion 528 may be a component configured to increase coupling force and prevent water from entering through a gap between the second portion 526 and a portion 534 of the outer shell 530 when the inner shell 520 is inserted into the outer shell 530 in the coupled state. For example, the second connecting portion 528 may be formed of rubber or silicone rubber.

For example, the elastic portion 521 may include a plurality of openings through which the plurality of cables 551, 552, and 553 may pass. The plurality of openings may be referred to as a plurality of second openings. In FIG. 5B, the plurality of openings include three openings through which the plurality of cables 551, 552, and 553 may pass, but an embodiment of the present disclosure is not limited thereto. The third fastening portion 522 may be rotated to fix the plurality of cables 551, 552, and 553 that have passed through the plurality of openings of the elastic portion 521. For example, as the third fastening portion 522 rotates in a first rotation direction (e.g., clockwise), a size of each of the plurality of openings may be reduced. In contrast, as the third fastening portion 522 rotates in a second rotation direction (e.g., counter-clockwise) opposite to the first rotation direction, the size of each of the plurality of openings may be expanded. Based on the reduction, the plurality of cables 551, 552, and 553 may be fixed to the elastic portion 521. Based on the expansion, the fixation of the plurality of cables 551, 552, and 553 to the elastic portion 521 may be released.

For example, the elastic portion 521 may comprise an elastic member for the reduction and the expansion. For example, the elastic member may include rubber or silicone rubber. For example, the third fastening portion 522 may comprise a non-conductive member. For example, the non-conductive member may include dielectrics.

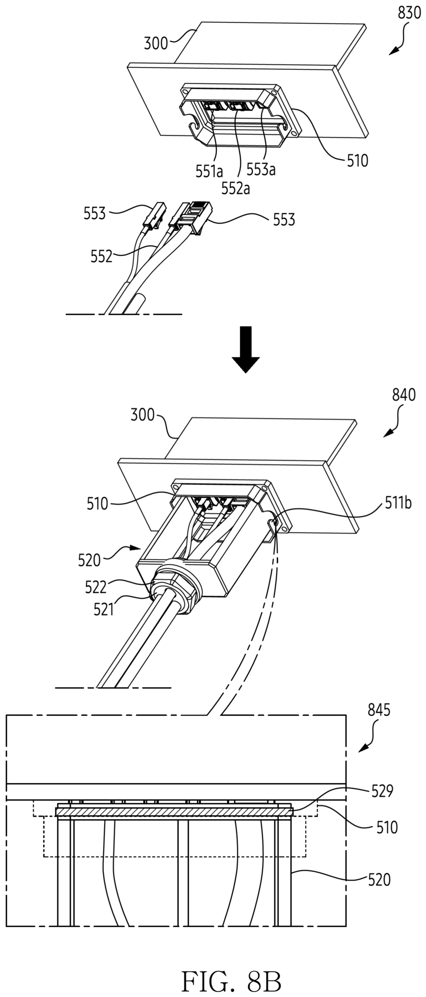

Although not illustrated in FIG. 5B, the elastic portion 521 may include a gap (not illustrated) for each of the plurality of openings. Each of the plurality of cables 551, 552, and 553 may pass through the gap and be fastened to an opening. Accordingly, the plurality of cables 551, 552, and 553 may be fastened in a state of having passed through each of the plurality of openings. Specific details related thereto are described below in FIG. 8B.

For example, the third portion 527 may include a third opening 523. For example, the third opening 523 may indicate a configuration for the plurality of cables 551, 552, and 553 to be exposed to the outside of the inner shell 520. Accordingly, even without separating the entire connector 500, as in the example at the top of FIG. 5B, even when only the outer shell 530 and the inner shell 520 are separated, a user installing the connector 500 may perform installation and operation of the plurality of cables 551, 552, and 553 exposed through the third opening 523. For example, the third portion 527 may include at least a portion of the housing of the inner shell 520 surrounding the third opening 523.

For example, the outer shell 530 may include a second fastening portion 531 and a housing 536. For example, the second fastening portion 531 may indicate a structure for coupling with the first fastening portion 511.

For example, the second fastening portion 531 may be coupled with the first fastening portion 511 such that the outer shell 530 is fastened to the receptacle 510, by moving with respect to the outer shell 530 based on a fixing member 532a. Alternatively, the second fastening portion 531 may be spaced apart from the first fastening portion 511 such that the outer shell 530 is separated from the receptacle 510, by moving with respect to the outer shell 530 based on the fixing member 532a. For example, the fixing member 532a may operate as an axis or a center (or a reference) for the movement of the second fastening portion 531. In a case in which the second fastening portion 531 is coupled with the first fastening portion 511, a portion 533 of the second fastening portion 531 may be in contact with the first fastening portion 511. For example, the second fastening portion 531 may include the one fixing member 532a formed on a portion of the second fastening portion 531, and another fixing member 532b formed on an opposite portion to the portion of the second fastening portion 531.

For example, the housing 536 may surround the inner shell 520 in the coupled state. For example, the housing 536 may overlap with the inner shell 520 such that the inner shell 520 is inserted and only at least a portion (e.g., the elastic portion 521 and the third fastening portion 522) of the inner shell 520 is visible from the outside. For example, a shape of the housing 536 may be formed based on a shape of the inner shell 520. For example, a portion 534 of the housing 536 may be formed similarly to a shape formed by the elastic portion 521 and the third fastening portion 522, in order to surround the elastic portion 521 and the third fastening portion 522 of the inner shell 520. For example, the housing 536 may comprise a conductive member.

In addition, in the coupled state, the outer shell 530 may include a third connecting portion 535 in which the outer shell 530 is in contact with the inner surface of the receptacle 510. The third connecting portion 535 may be included in a portion of the housing 536 of the outer shell 530. For example, in the coupled state, the third connecting portion 535 may be a component configured to increase coupling force and prevent water from entering through a gap between the outer shell 530 and the inner surface of the receptacle 510 when the outer shell 530 is in contact with the inner surface of the receptacle 510. For example, the third connecting portion 535 may be formed of rubber or silicone rubber.

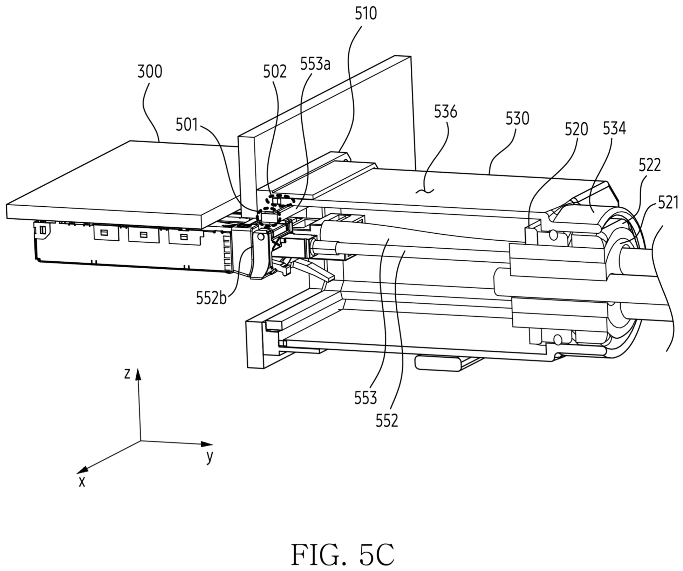

FIG. 5C illustrates an example of a connection state between a plurality of cables and a plurality of ports inside a dual layer connector in a coupled state.

The coupled state may indicate a state in which an inner shell 520 and an outer shell 530, which are configured with a dual layer of the dual layer connector, are fastened to a receptacle 510. The dual layer connector may indicate the example of the connector 500 of FIGS. 5A and 5B.

FIG. 5C may indicate an example in which the connector 500 of FIGS. 5A and 5B and the electronic device 300 of FIG. 3A are cut parallel to a yz plane, in order to indicate the connection state between the plurality of cables and the plurality of ports inside the connector 500. The plurality of cables may include a plurality of cables corresponding to the plurality of ports of FIG. 3B. For example, the plurality of cables may include a signaling cable, a power cable, or a radio frequency (RF) cable. In the example of FIG. 5C, for convenience of description, an example of a plurality of signaling cables is illustrated. For example, FIG. 5C illustrates a second cable 552, which is an optic cable, and a third cable 553, which is a UDA cable. However, an embodiment of the present disclosure is not limited thereto. An embodiment of the present disclosure may also be applied to another type of cable or to a different number of cables.

Referring to FIG. 5C, the connector 500 in the coupled state may be connected to the electronic device 300. For example, the receptacle 510 of the connector 500 may be located in a region surrounding ports 552a and 553a of the electronic device 300, and may be connected to the electronic device 300 (or to the case 305 of FIGS. 3A and 3B). The region may include a surface of a side of the case. In the coupled state, the second cable 552 may be fastened to a second port 552a, and the third cable 553 may be fastened to a third port 553a. For example, the second port 552a may be included in an optical module.

Referring to FIG. 5C, in the coupled state, each of the inner shell 520 and the outer shell 530 may be in contact with an inner surface of the receptacle 510. For example, the inner shell 520 may be in contact with a portion 501 of the inner surface of the receptacle 510. A portion of the inner shell 520 that is in contact with the portion 501 may include a first portion (e.g., the first portion 525 of FIG. 5B). For example, the first portion may include a first connecting portion (e.g., the first connecting portion 529 of FIG. 5B) included in the first portion. In addition, the outer shell 530 may be in contact with a portion 502 of the inner surface of the receptacle 510. A portion of the outer shell 530 that is in contact with the portion 502 may include a third connecting portion (not illustrated) (e.g., the third connecting portion 535 of FIG. 5B). The third connecting portion may be included in a portion of a housing 536 of the outer shell 530. For example, in the coupled state, the third connecting portion may be a component configured to increase coupling force and prevent water from entering through a gap between the outer shell 530 and the inner surface of the receptacle 510 when the outer shell 530 is in contact with the inner surface of the receptacle 510. For example, the third connecting portion may be formed of rubber or silicone rubber.

Referring to FIG. 5C, in the coupled state, the inner shell 520 may be inserted into an inner surface of the outer shell 530. For example, an elastic portion 521 and a third fastening portion 522 of the inner shell 520 may be surrounded by a portion 534 of the housing 536. In the coupled state, the elastic portion 521 may fix the plurality of cables 552 and 553. For example, the plurality of cables 552 and 553 may pass through a plurality of openings of the elastic portion 521 and may be in a state tightened by the third fastening portion 522.

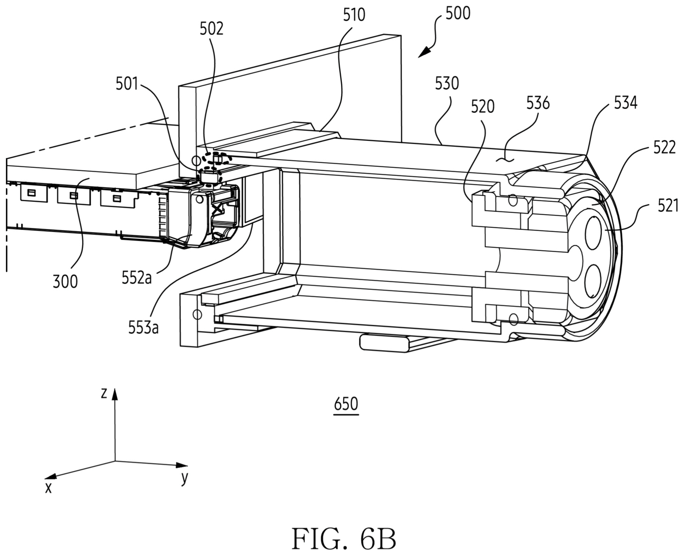

Referring to the above description, a dual layer connector according to an embodiment of the present disclosure and an electronic device including the same may prevent a configuration of a cable from being broken in a process of connecting and separating the cable and the port, by including a layer for fixing a cable (e.g., the inner shell 520) and a separate layer (e.g., the outer shell 530). In addition, the dual layer connector according to an embodiment of the present disclosure and the electronic device including the same, by being used to connect a plurality of cables to ports, may reduce a size of an electronic device (e.g., the electronic device 300 or the case 305) in which a port is disposed, compared to a case in which a separate connector is used for each of the cables. In addition, the dual layer connector according to an embodiment of the present disclosure may be applied regardless of a structure and a type of a cable, thereby securing versatility and improving productivity of the connector. Hereinafter, FIGS. 6A and 6B illustrate a more specific structure of the dual layer connector.

FIGS. 6A and 6B illustrate an example of a dual layer connector.

An example 600 of FIG. 6A may indicate an example of the connector 500 in the separated state in FIG. 5B. An example 650 of FIG. 6B may indicate an example of the connector 500 in the coupled state in FIGS. 5A and 5C.

Referring to the example 600, the connector 500 may include a receptacle 510, an inner shell 520, and an outer shell 530.

For example, the receptacle 510 may include a hole 512 and a first fastening portion 511. For example, the hole 512 may indicate an opening for connecting ports (not illustrated) with a plurality of cables (not illustrated), by the inner shell 520 and the outer shell 530 being coupled with the receptacle 510 in a state of being in contact with an inner surface of the hole 512. For example, the first fastening portion 511 may include two first fastening portions 511a and 511b. For example, a first fastening portion 511a may be formed on a side, and another first fastening portion 511b may be formed on another side opposite to the side of the receptacle 510.

For example, the inner shell 520 may include a first portion 525 connected with the hole 512 of the receptacle 510, a second portion 526, and a third portion 527 between the first portion 525 and the second portion 526.

For example, in a case in which the connector 500 is in the coupled state, the first portion 525 may include a first opening 524 to be located inside the hole 512 of the receptacle 510. For example, in the separated state, the plurality of cables may pass through the first opening 524. In the coupled state, the plurality of cables and the ports may be located in the first opening 524. The first portion 525 may include a first connecting portion 529. For example, in the coupled state, the first connecting portion 529 may be a component configured to increase coupling force and prevent water from entering through a gap between the first portion 525 and an inner surface of the receptacle 510 when the first portion 525 is in contact with the inner surface. For example, the first connecting portion 529 may be formed of rubber or silicone rubber.

For example, the second portion 526 may include an elastic portion 521 through which the plurality of cables pass, and a third fastening portion 522. For example, the second portion 526 may include a portion of a housing extending from the third portion 527 to which the elastic portion 521 and the third fastening portion 522 are connected. For example, the housing may be a housing of the inner shell 520 and may comprise a non-conductive member. For example, the non-conductive member may be referred to as dielectrics. In addition, the second portion 526 may include a second connecting portion 528. For example, the second connecting portion 528 may be a component configured to increase coupling force and prevent water from entering through a gap between the second portion 526 and a portion 534 of the outer shell 530 when the inner shell 520 is inserted into the outer shell 530 in the coupled state. For example, the second connecting portion 528 may be formed of rubber or silicone rubber.

For example, the elastic portion 521 may include a plurality of openings through which a plurality of cables 551, 552, and 553 may pass. The plurality of openings may be referred to as a plurality of second openings. In FIG. 6A, the plurality of openings include three openings through which the plurality of cables may pass, but an embodiment of the present disclosure is not limited thereto. The third fastening portion 522 may be rotated to fix the plurality of cables that have passed through the plurality of openings of the elastic portion 521. For example, as the third fastening portion 522 rotates in a first rotation direction (e.g., clockwise), a size of each of the plurality of openings may be reduced. In contrast, as the third fastening portion 522 rotates in a second rotation direction (e.g., counter-clockwise) opposite to the first rotation direction, the size of each of the plurality of openings may be expanded. Based on the reduction, the plurality of cables may be fixed to the elastic portion 521. Based on the expansion, the fixation of the plurality of cables to the elastic portion 521 may be released.

For example, the elastic portion 521 may comprise an elastic member for the reduction and the expansion. For example, the elastic member may include rubber or silicone rubber. For example, the third fastening portion 522 may comprise a non-conductive member. For example, the non-conductive member may include dielectrics.

For example, the third portion 527 may include a third opening 523. For example, the third opening 523 may indicate a configuration for the plurality of cables 551, 552, and 553 to be exposed to the outside of the inner shell 520. For example, the third portion 527 may include at least a portion of the housing of the inner shell 520 surrounding the third opening 523.

For example, the outer shell 530 may include a second fastening portion 531 and a housing 536. For example, the second fastening portion 531 may indicate a structure for coupling with the first fastening portion 511.

For example, the second fastening portion 531 may be coupled with the first fastening portion 511 such that the outer shell 530 is fastened to the receptacle 510, by moving with respect to the outer shell 530 based on a fixing member 532a. Alternatively, the second fastening portion 531 may be spaced apart from the first fastening portion 511 such that the outer shell 530 is separated from the receptacle 510, by moving with respect to the outer shell 530 based on the fixing member 532a. For example, the fixing member 532a may operate as an axis or a center (or a reference) for the movement of the second fastening portion 531. In a case in which the second fastening portion 531 is coupled with the first fastening portion 511, a portion 533 of the second fastening portion 531 may be in contact with the first fastening portion 511. In FIG. 6A, only the one fixing member 532a formed on a portion of the second fastening portion 531 is illustrated, but another fixing member (not illustrated) may be formed on another portion opposite to the portion of the second fastening portion 531.

For example, the housing 536 may surround the inner shell 520 in the coupled state. For example, the housing 536 may overlap with the inner shell 520 such that the inner shell 520 is inserted and only at least a portion (e.g., the elastic portion 521 and the third fastening portion 522) of the inner shell 520 is visible from the outside. For example, a shape of the housing 536 may be formed based on a shape of the inner shell 520. For example, the portion 534 of the housing 536 may be formed similarly to a shape formed by the elastic portion 521 and the third fastening portion 522, in order to surround the elastic portion 521 and the third fastening portion 522 of the inner shell 520. Accordingly, the outer shell 530 may include an opening formed by the portion 534. The opening formed by the portion 534 may be an opening through which the second portion 526 and a plurality of cables pass.

In addition, in the coupled state, the outer shell 530 may include a third connecting portion 535 in which the outer shell 530 is in contact with the inner surface of the receptacle 510. The third connecting portion 535 may be included in a portion of the housing 536 of the outer shell 530. For example, in the coupled state, the third connecting portion 535 may be a component configured to increase coupling force and prevent water from entering through a gap between the outer shell 530 and the inner surface of the receptacle 510, when the outer shell 530 is in contact with the inner surface of the receptacle 510. For example, the third connecting portion 535 may be formed of rubber or silicone rubber.

The example 650 of FIG. 6B illustrates an example in which the connector 500 of FIG. 6A connected to an electronic device 300 is cut parallel to a yz plane.

Referring to the example 650, the connector 500 in the coupled state may be connected with the electronic device 300. For example, the receptacle 510 of the connector 500 may be located in a region surrounding ports 552a and 553a of the electronic device 300, and may be connected to the electronic device 300 (or the case 305 of FIGS. 3A and 3B). The region may include a surface of a side of the case.

Referring to FIG. 6B, in the coupled state, each of the inner shell 520 and the outer shell 530 may be in contact with the inner surface of the receptacle 510. For example, the inner shell 520 may be in contact with a portion 501 of the inner surface of the receptacle 510. A portion of the inner shell 520 that is in contact with the portion 501 may include a first portion (e.g., the first portion 525 of FIG. 6A). For example, the first portion may include a first connecting portion (e.g., the first connecting portion 529 of FIG. 6A) included in the first portion. In addition, the outer shell 530 may be in contact with a portion 502 of the inner surface of the receptacle 510. A portion of the outer shell 530 that is in contact with the portion 502 may include a third connecting portion (not illustrated) (e.g., the third connecting portion 535 of FIG. 6A). The third connecting portion may be included in a portion of the housing 536 of the outer shell 530. For example, in the coupled state, the third connecting portion may be a component configured to increase coupling force and prevent water from entering through a gap between the outer shell 530 and the inner surface of the receptacle 510 when the outer shell 530 is in contact with the inner surface of the receptacle 510. For example, the third connecting portion may be formed of rubber or silicone rubber.

Referring to FIG. 6B, in the coupled state, the inner shell 520 may be inserted into an inner surface of the outer shell 530. For example, the elastic portion 521 and the third fastening portion 522 of the inner shell 520 may be surrounded by the portion 534 of the housing 536. For example, in the coupled state, the elastic portion 521 and the third fastening portion 522 may be located in an opening (e.g., the opening 534a of FIG. 6A) formed by the portion 534.

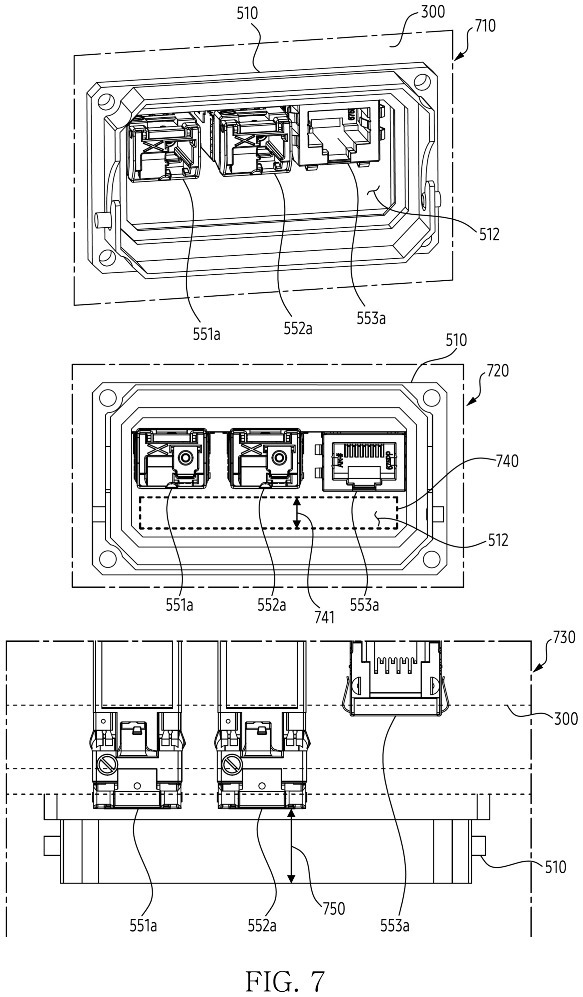

FIG. 7 illustrates an example of a receptacle and ports located in a hole of the receptacle.

A receptacle 510 of FIG. 7 may indicate an example of the receptacle 510 of FIGS. 5A to 6B. Referring to an example 710, ports 551a, 552a, and 553a may be located inside a hole 512 of the receptacle 510. For example, when the receptacle 510 is connected with an electronic device 300, the ports may be located in a region formed by the hole 512. The electronic device 300 of FIG. 7 may include the electronic device 300 of FIG. 3A. For example, the electronic device 300 of FIG. 5A may be configured as a case (e.g., the case 305 of FIG. 3A). The ports 551a, 552a, and 553a may be formed in a partial region of the case. For example, the partial region may include a surface of a side of the case. For example, the partial region may include a region extending inward from the surface.

Referring to an example 720 in which the example 710 is viewed from the front, the ports 551a, 552a, and 553a may be located in the region formed by the hole 512. For example, the region may further include an extra space 740 in addition to a space occupied by the ports 551a, 552a, and 553a. The space 740 may indicate a space for easily performing installation and operation for a plurality of cables corresponding to the ports 551a, 552a, and 553a, even in a state in which the receptacle 510 is installed in the electronic device 300. In other words, a length 741 of the space 740, which is another portion different from the portion in which the ports 551a, 552a, and 553a are disposed, may be formed to be longer than a defined length. For example, the defined length may be identified based on at least one of a type (or a size) of a port, a size of a body part (e.g., a finger), or a type (or a size) of a cable.

Referring to an example 730 in which the example 710 is viewed from above, the receptacle 510 may be formed as long as a length 750 with respect to a port when connected to the electronic device 300. For example, the receptacle 510 may be formed as long as the length 750 from a port 551a or 552a having the largest size among the ports 551a, 552a, and 553a. This may be for waterproofing the electronic device 300 installed outdoors. For example, the length 750 may be identified based on a structure of an inner shell (e.g., the inner shell 520 of FIGS. 5A to 6B) and an outer shell (e.g., the outer shell 530 of FIGS. 5A to 6B) of a connector (e.g., the connector 500 of FIGS. 5A to 6B). For example, the length 750 may be identified based on at least one of a portion in which a first connecting portion of the inner shell is located in a first portion, or a portion in which a third connecting portion of the outer shell is located in a housing.

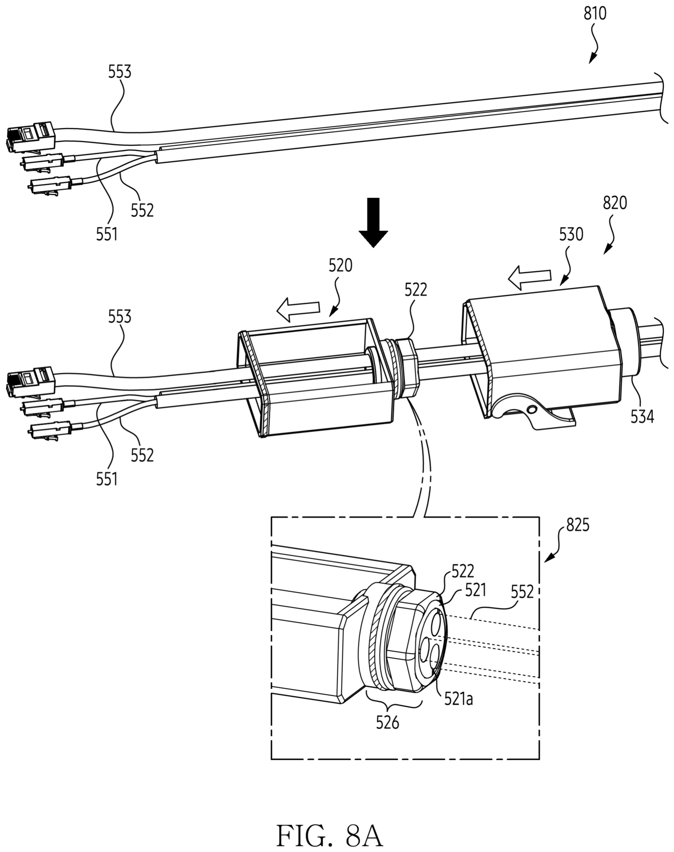

FIGS. 8A to 8C illustrate an example of a method for connecting a plurality of cables with a plurality of ports using a dual layer connector.

Referring to FIGS. 8A to 8C, examples 810, 820, 830, 840, 850, and 860 for a process of connecting the plurality of cables with the plurality of ports based on the dual layer connector are illustrated. For example, the dual layer connector may include the connector 500 of FIGS. 5A to 6B. The same reference numerals may be used for the same descriptions.

Referring to an example 810 and an example 820, an inner shell 520 and an outer shell 530 may be coupled with respect to a plurality of cables 551, 552, and 553. For example, the plurality of cables 551, 552, and 553 may be coupled by passing through an elastic portion 521 of a second portion 526 included in the inner shell 520. Referring to an example 825 of enlarging and displaying a connection state between the elastic portion 521 and the plurality of cables 551, 552, and 553, each of the plurality of cables 551, 552, and 553 may be fastened in a state of having passed through each of a plurality of openings included in the elastic portion 521. The elastic portion 521 may include gaps 521a for each of the plurality of openings. Each of the plurality of cables 551, 552, and 553 may pass through the gaps 521a and be fastened to the opening. Accordingly, the plurality of cables 551, 552, and 553 may be fastened in a state of having passed through each of the plurality of openings. In addition, the plurality of cables 551, 552, and 553 may be coupled by passing through an opening formed by a portion 534 of the outer shell 530.

Referring to an example 830 and an example 840, the plurality of cables 551, 552, and 553 may be connected to ports 551a, 552a, and 553a. For example, a receptacle 510 may be fastened to an electronic device 300 with respect to the ports 551a, 552a, and 553a. For example, the ports 551a, 552a, and 553a may be located in a region formed by a hole of the receptacle 510.

Referring to the example 840, after the ports 551a, 552a, and 553a and the plurality of cables 551, 552, and 553 are connected, the inner shell 520 may be inserted into the receptacle 510. Referring to an example 845, which specifically illustrates the state in which the inner shell 520 is inserted into the receptacle 510, a first connecting portion 529 of the inner shell 520 may move along an inner surface of the receptacle 510. The inner shell 520 may be inserted so as to be located in a region adjacent to a surface of the electronic device 300. In this case, the first connecting portion 529 of the inner shell 520 may be in contact with the inner surface of the receptacle 510.

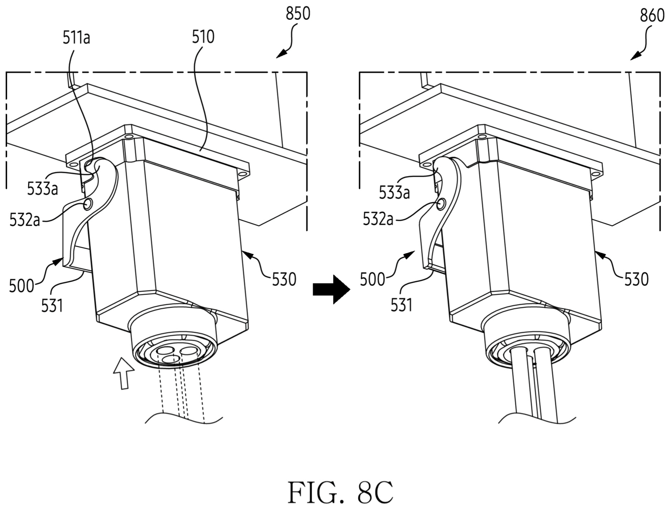

Referring to an example 850, in a state in which the inner shell 520 is inserted, the outer shell 530 may be inserted with respect to the receptacle 510. For example, the outer shell 530 may move along the inner shell 520. The outer shell 530 may be inserted so as to be located in a region adjacent to a surface of the electronic device 300. In this case, although not illustrated in FIG. 8C, a third connecting portion (not illustrated) of the outer shell 530 may be in contact with the inner surface of the receptacle 510.

Referring to the example 850 and an example 860, after the outer shell 530 is inserted into the receptacle 510, a second fastening portion 531 of the outer shell 530 may be coupled with a first fastening portion 511a. For example, as the second fastening portion 531 moves with respect to the outer shell 530 based on a fixing member 532a, a portion 533a of the second fastening portion 531 may be coupled with the first fastening portion 511a. In FIG. 8C, the one fixing member 532a, the portion 533a, and the first fastening portion 511a are illustrated, but an embodiment of the present disclosure is not limited thereto. In a side of the connector 500 opposite to a side in which the fixing member 532a, the portion 533a, and the first fastening portion 511a are located, another fixing member, a portion of the second fastening portion 531, and a first fastening portion may be included.

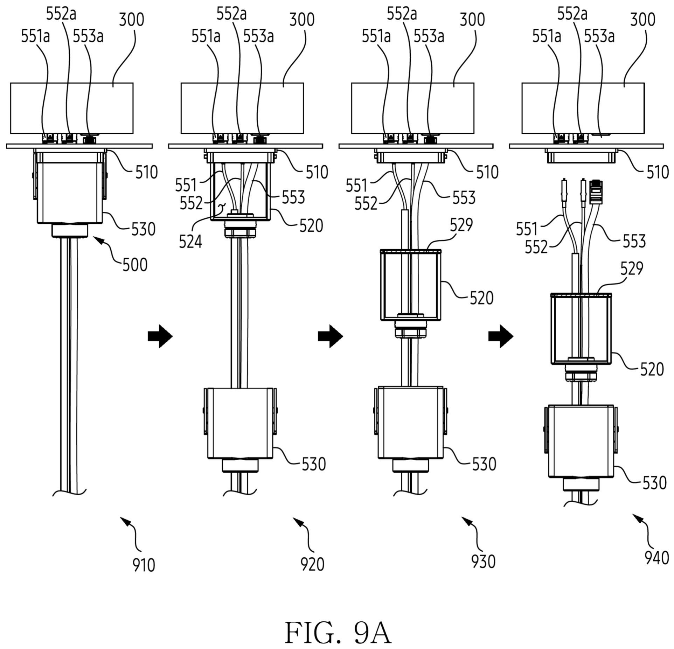

FIG. 9A illustrates an example of a method for separating a plurality of cables, connected using a dual layer connector, from a plurality of ports.

Referring to FIG. 9A, examples 910, 920, 930, and 940 for a process of separating the plurality of cables, connected with the plurality of ports based on the dual layer connector, are illustrated. For example, the dual layer connector may include the connector 500 of FIGS. 5A to 6B. The same reference numerals may be used for the same descriptions.

Referring to an example 910, the connector 500 may be connected with an electronic device 300. For example, a receptacle 510 of the connector 500 may be coupled with the electronic device 300. Ports 551a, 552a, and 553a may be located in a region formed by a hole of the receptacle 510. For example, an inner shell 520 and an outer shell 530 of the connector 500 may be in a state of being inserted into the receptacle 510. In this case, the inner shell 520 may be in a state of being inserted into the outer shell 530 so as not to be visible from the outside except for at least a portion thereof. For example, the at least a portion may include an elastic portion (e.g., the elastic portion 521 of FIGS. 5A to 6B) and a third fastening portion (e.g., the third fastening portion 522 of FIGS. 5A to 6B) of a second portion (e.g., the second portion 526 of FIGS. 5A to 6B) of the inner shell 520.

Referring to an example 920, the outer shell 530 of the connector 500 may be spaced apart from the receptacle 510. For example, as a second fastening portion 531 moves with respect to the outer shell 530 based on fixing members 532a and 532b, the outer shell 530 may be separated from a first fastening portion 511 of the receptacle 510. Accordingly, fastening between the outer shell 530 and the receptacle 510 may be released. The outer shell 530, being movable as the fastening is released, may be spaced apart from the receptacle 510. Referring to the example 920, when the outer shell 530 is spaced apart from the receptacle 510, the inner shell 520 may be exposed to be visible from the outside. Accordingly, a plurality of cables 551, 552, and 553 passing through the inner shell 520 may be exposed from the outside of the inner shell 520. For example, the plurality of cables 551, 552, and 553 may be exposed by a third opening 523 of a third portion 527 included in the inner shell 520. In a state such as the example 920, a user installing the connector 500 may perform installation and operation for the plurality of cables 551, 552, and 553.

Referring to an example 930, after the outer shell 530 is spaced apart from the receptacle 510, the inner shell 520 may be moved from the receptacle 510. For example, the inner shell 520 may be spaced apart from the receptacle 510 by external force. This is because a connection between the inner shell 520 and the receptacle 510 is a temporary connection by a first connecting portion 529 of the inner shell 520. For example, the temporary connection may indicate a fixation by friction due to rubber or silicone rubber forming the first connecting portion 529.

Referring to an example 940, after the inner shell 520 is spaced apart from the receptacle 510, a connection between the plurality of cables 551, 552, and 553 and the ports 551a, 552a, and 553a may be released. However, an embodiment of the present disclosure is not limited thereto. A connection of the plurality of cables 551, 552, and 553 may be released by a first opening 524 included in the inner shell 520. In other words, even when the inner shell 520 is not spaced apart from the receptacle 510, the connection of the plurality of cables 551, 552, and 553 may be released through the first opening 524.

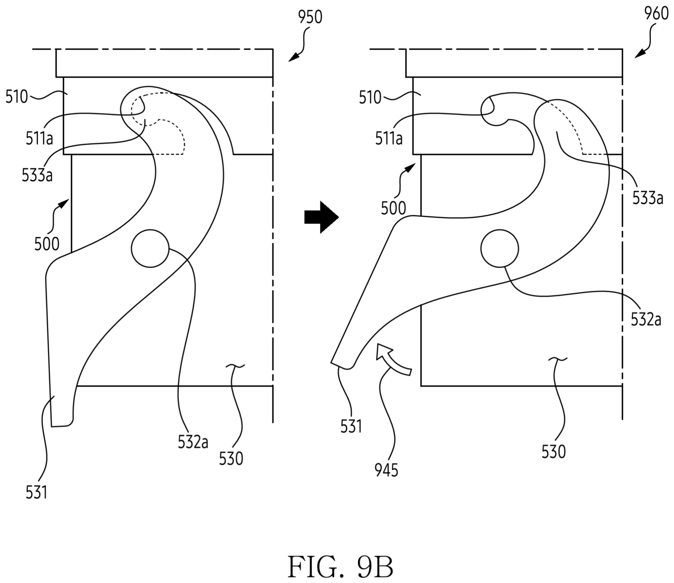

FIG. 9B illustrates an example of a method for coupling and separating between a first fastening portion of a receptacle and a second fastening portion of an outer shell.

A connector 500 of FIG. 9B may be understood to be substantially the same as the connector 500 of FIGS. 5A to 6B. For example, a receptacle 510 of FIG. 9B may be an example of the receptacle 510 of FIGS. 5A to 6B. The same reference numerals may be used for the same descriptions.

Referring to FIG. 9B, an outer shell 530 may include a second fastening portion 531. For example, the second fastening portion 531 may indicate a structure for coupling with a first fastening portion 511a. For example, the second fastening portion 531 may be coupled with the first fastening portion 511a such that the outer shell 530 is fastened to the receptacle 510, by moving with respect to the outer shell 530 based on a fixing member 532a. Alternatively, the second fastening portion 531 may be spaced apart from the first fastening portion 511a such that the outer shell 530 is separated from the receptacle 510, by moving with respect to the outer shell 530 based on the fixing member 532a. For example, the fixing member 532a may operate as an axis or a center (or a reference) for the movement of the second fastening portion 531. In a case in which the second fastening portion 531 is coupled with the first fastening portion 511a, a portion 533a of the second fastening portion 531 may be in contact with the first fastening portion 511a. For example, the second fastening portion 531 may include the one fixing member 532a formed on a portion of the second fastening portion 531 and another fixing member (not illustrated) formed on an opposite portion to the portion of the second fastening portion 531. In addition, for example, the receptacle 510 may include the one first fastening portion 511a formed on a portion of the receptacle 510, and another first fastening portion (not illustrated) formed on an opposite portion to the portion of the receptacle 510.

Referring to an example 950, the first fastening portion 511a may be coupled with the second fastening portion 531. For example, the portion 533a of the second fastening portion 531 may be in contact with the first fastening portion 511a. Referring to an example 960, the portion 533a of the second fastening portion 531 may be spaced apart from the first fastening portion 511a as the second fastening portion 531 moves in a rotation direction 945 based on the fixing member 532a. For example, the portion 533a of the second fastening portion 531 may be spaced apart from the first fastening portion 511a based on external force in the rotation direction 945 with respect to the second fastening portion 531.

FIG. 9B illustrates a structure of the first fastening portion 511 and the second fastening portion 531 according to a fixing method using a lever, but an embodiment of the present disclosure is not limited thereto. For example, the connector 500 may include a fully fasten structure including not only the fixing method using the lever, but also a push pull method or a bayonet method. The fully fasten structure may include a structure in which fastening is completed after an operation for fixation is performed. For example, the first fastening portion 511 and the second fastening portion 531, which are the fully fasten structure, may include at least one of a push pull connector, a lever, or a bayonet connector. Therefore, the structure of the first fastening portion 511 and the second fastening portion 531 (or the connector 500) is not to be interpreted as being limited to the structure of FIG. 9B.

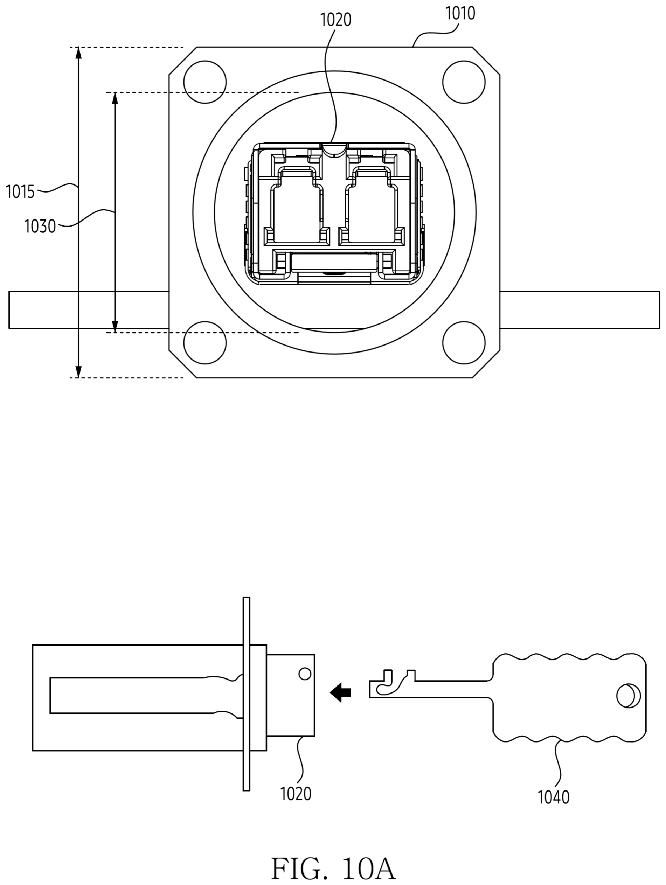

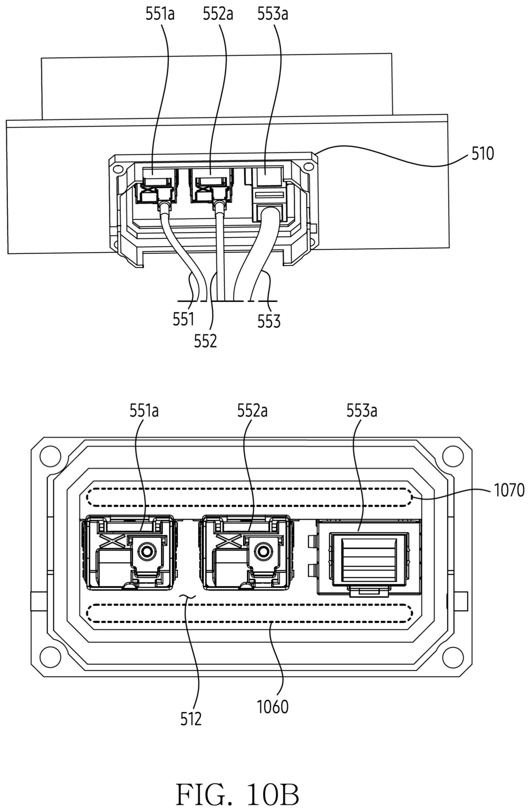

FIG. 10A illustrates an example of a connector for a single cable and an arrangement state of one port corresponding to one cable. FIG. 10B illustrates an example of a dual layer connector for a plurality of cables and an arrangement state of a plurality of ports corresponding to the plurality of cables.

The plurality of cables may include various types of cables. For example, the plurality of cables may include a signaling cable, a power cable, or a radio frequency (RF) cable. The signaling cable may include a cable for performing signaling with an electronic device (e.g., the electronic device 300 of FIG. 3A) and another electronic device (not illustrated). For example, the other electronic device may include the DU 210 of FIG. 2. For example, the signaling cable may include an optic cable, a RET cable, and a UDA cable. However, an embodiment of the present disclosure is not limited thereto, and the signaling cable of the present disclosure may also be applied to another type of cable for signaling. The power cable may include a cable for supplying power to the electronic device 300. For example, the power cable may include a direct current (DC) power cable. However, an embodiment of the present disclosure is not limited thereto, and the power cable of the present disclosure may also be applied to another type of cable for power supply. The RF cable may include a cable for connecting the electronic device 300 with an antenna for transmitting and receiving a signal. The signal may include an RF signal. However, an embodiment of the present disclosure is not limited thereto, and the RF cable of the present disclosure may also be applied to another type of cable used for transmitting and receiving a signal.

FIG. 10A illustrates examples of connecting one cable with one port using a connector. Referring to FIG. 10A, one port 1020 may be disposed in a region formed by an opening of a receptacle 1010 of the connector. A size of the region formed by the opening of the receptacle 1010 may be determined based on a size of the port 1020. For example, the size of the region may correspond to an area of a circle having a diameter of a first length 1030. For example, the first length 1030 may be configured such that the port 1020 located in the region, is fitted. In other words, the region may include little or no extra space other than a region occupied by the port 1020. In addition, a size of the receptacle 1010 may be configured to include the region around the port 1020. For example, the size of the receptacle 1020 may be determined based on a second length 1015.

Referring to the above description, in order to locate the port 1020 in the region and to connect the cable to the port 1020 using the connector, a minimum installation space (e.g., the second length 1015) may be required. In this case, since the region includes only a narrow extra space other than the region occupied by the port 1020 to minimize the installation space, a separate tool 1040 may be required. For example, the tool 1040 for removing an optical module connected to the port 1020 may be required. The optical module may be included in an electronic device (e.g., the electronic device 300 or the case 305 of FIG. 3A).

In contrast, FIG. 10B illustrates examples of a receptacle 510 of a dual layer connector according to an embodiment of the present disclosure connecting a plurality of cables with a plurality of ports. Referring to FIG. 10B, ports 551a, 552a, and 553a may be disposed in a region formed by a hole 512 of the receptacle 510 of the dual layer connector. The region formed by the hole 512 may further include an extra space in addition to a space in which the ports 551a, 552a, and 553a are disposed. For example, the extra space may be formed in a lower region 1060 or an upper region 1070 based on the region in which the ports 51a, 552a, are 553a are disposed.

Referring to the above description, the dual layer connector according to an embodiment of the present disclosure may further include an extra space, such as the region 1060 and the region 1070, together with the space for accommodating the plurality of ports. According to an embodiment of the present disclosure, the dual layer connector and the electronic device including the same may provide an environment in which operations such as installation of cables with respect to the ports 551a, 552a, and 553a, and removal/addition of a module (e.g., the optical module) related to the ports 551a, 552a, and 553a, may be easily performed through the extra space.

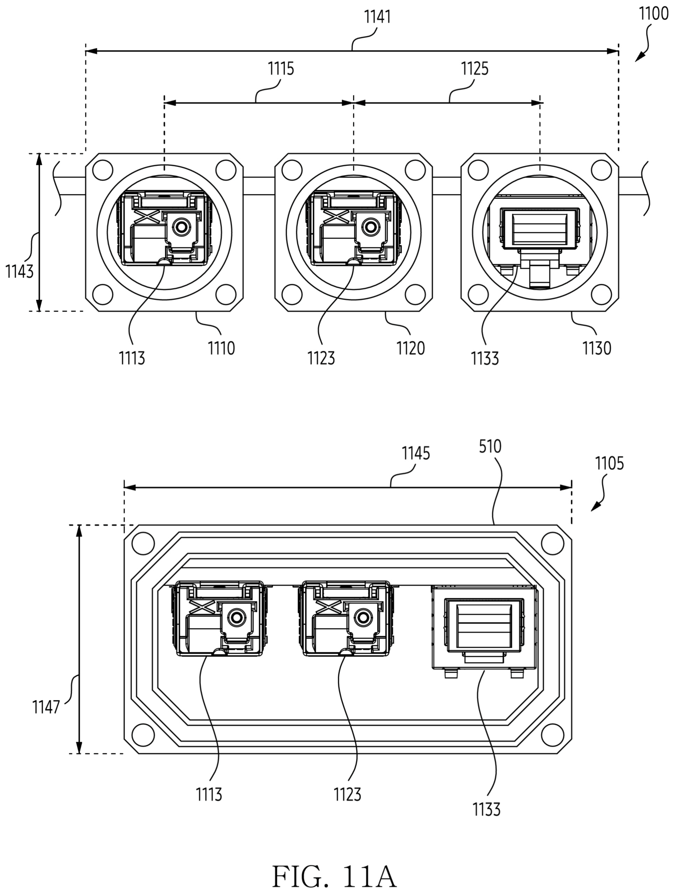

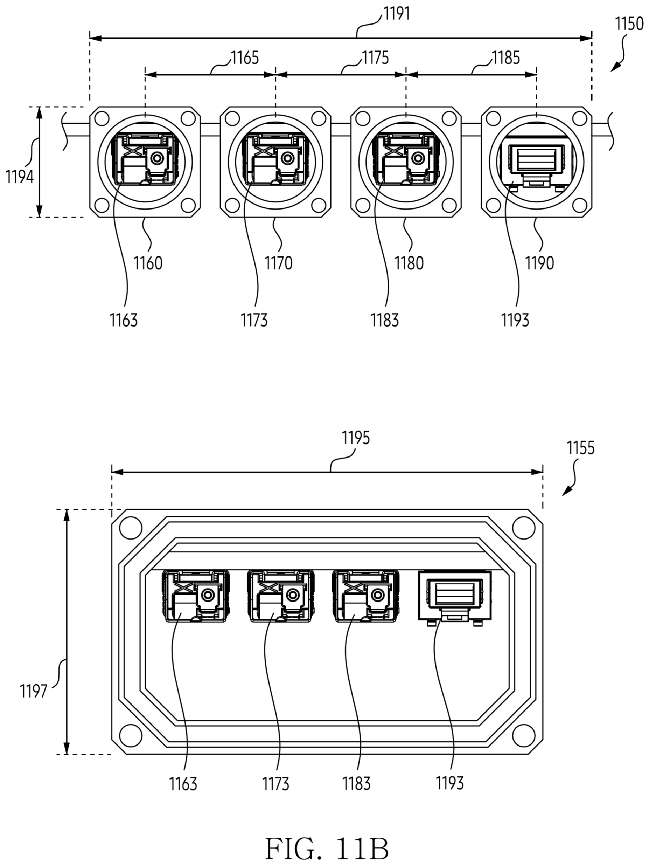

FIGS. 11A and 11B illustrate examples of an installation space required for each of a connector for a single cable and a dual layer connector for a plurality of cables.

The installation space may be referred to as a space for installing a receptacle of the connector. For example, the installation space may indicate a region of an electronic device (or a case) for installing the receptacle.

FIG. 11A illustrates an example 1100 using a plurality of connectors with respect to three ports, and an example 1105 using one dual layer connector with respect to three ports.

Referring to the example 1100, a receptacle of each of the plurality of connectors may be installed with respect to each of three ports 1113, 1123, and 1133. The ports 1113, 1123, and 1133 may include two optical ports 1113 and 1123 and a UDA port 1133. The example 1100 illustrates the two optical ports 1113 and 1123 and the one UDA port 1133, but the number, a type, or a size of the ports is not limited to the example illustrated in FIG. 11A.

Referring to the example 1100, when one receptacle is installed with respect to one port, a minimum separation distance between the ports 1113, 1123, and 1133 may be required, in order to secure an installation space for the receptacle. For example, the optical port 1113 and the optical port 1123 may be spaced apart by a length 1115. In addition, the optical port 1123 and the UDA port 1133 may be spaced apart by a length 1125. An installation space for the three ports 1113, 1123, and 1133 may be defined by a horizontal length 1141 and a vertical length 1143.

In contrast, referring to the example 1105, one receptacle 510 of the dual layer connector may be installed with respect to the three ports 1113, 1123, and 1133. The ports 1113, 1123, and 1133 may include the two optical ports 1113 and 1123 and the one UDA port 1133. The example 1100 illustrates the two optical ports 1113 and 1123 and the one UDA port 1133, but the number, the type, or the size of the ports is not limited to the example illustrated in FIG. 11A.

Referring to the example 1105, the ports 1113, 1123, and 1133 may be located in a region formed by a hole (e.g., a hole 512) of the receptacle 510. In a case of using the receptacle 510 of the example 1105, the installation space for the three ports 1113, 1123, and 1133 may be defined by a horizontal length 1145 and a vertical length 1147.

Comparing the example 1100 and the example 1105, the horizontal length 1141 in a case of using one connector for one port may be formed to be longer than the horizontal length 1145 in a case of using one connector for a plurality of ports. For example, the horizontal length 1145 may be a length reduced by approximately 24% compared to the horizontal length 1141. In addition, the vertical length 1143 in a case of using one connector for one port may be formed to be shorter than the vertical length 1147 in a case of using one connector for a plurality of ports. An electronic device (or a case) in which a plurality of ports are installed may require to reduce a space in a horizontal (or width) direction rather than a space in a vertical (or height) direction. This may be because, as illustrated in FIG. 3B, the electronic device (or the case) has sufficient space in the vertical direction, but a space in the horizontal direction may be formed relatively narrow. Therefore, in a case of using the dual layer connector according to an embodiment of the present disclosure, a size of the electronic device (or the case) may be reduced. In addition, in a case of using the dual layer connector according to an embodiment of the present disclosure, through the vertical length 1147 formed to be longer than the vertical length 1143, a more efficient operation may be performed even in a case in which the receptacle 510 is installed with respect to the ports.

FIG. 11B, unlike FIG. 11A, illustrates an example 1150 using a plurality of connectors with respect to four ports, and an example 1155 using one dual layer connector with respect to four ports.

Referring to the example 1150, a receptacle of each of the plurality of connectors may be installed with respect to each of four ports 1163, 1173, 1183, and 1193. The ports 1163, 1173, 1183, and 1193 may include three optical ports 1163, 1173, and 1183, and a UDA port 1193.

Referring to the example 1150, when one receptacle is installed with respect to one port, a minimum separation distance between the ports 1163, 1173, 1183, and 1193 may be required, in order to secure an installation space for the receptacle. For example, the optical port 1163 and the optical port 1173 may be spaced apart by a length 1165. The optical port 1173 and the optical port 1183 may be spaced apart by a length 1175. In addition, the optical port 1183 and the UDA port 1193 may be spaced apart by a length 1185. An installation space for the four ports 1163, 1173, 1183, and 1193 may be defined by a horizontal length 1191 and a vertical length 1193.

In contrast, referring to the example 1155, a receptacle of each of the plurality of connectors may be installed with respect to each of the four ports 1163, 1173, 1183, and 1194. The ports 1163, 1173, 1183, and 1193 may include the three optical ports 1163, 1173, and 1183, and the UDA port 1193.

Referring to the example 1155, the ports 1163, 1173, 1183, and 1193 may be located in a region formed by a hole (e.g., a hole 512) of the receptacle 510. In a case of using the receptacle 510 of the example 1155, the installation space for the four ports 1163, 1173, 1183, and 1193 may be defined by a horizontal length 1195 and a vertical length 1197.

Comparing the example 1150 and the example 1155, the horizontal length 1191 in a case of using one connector for one port may be formed to be longer than the horizontal length 1195 in a case of using one connector for a plurality of ports. For example, the horizontal length 1195 may be a length reduced by approximately 30% compared to the horizontal length 1191. Therefore, in a case of using the dual layer connector according to an embodiment of the present disclosure, a size of an electronic device (or a case) may be reduced. In addition, in a case of using the dual layer connector according to an embodiment of the present disclosure, through the vertical length 1197 formed to be longer than the vertical length 1193, a more efficient operation may be performed even when the receptacle 510 is installed with respect to the ports.

Referring to FIGS. 1 to 11B, a dual layer connector in embodiments of the present disclosure may be used for a plurality of cables and a plurality of ports, unlike a connector used for one cable and one port. The plurality of cables and the plurality of ports may be configured with various types and numbers. In addition, the dual layer connector according to embodiments of the present disclosure may include a plurality of layers (e.g., an inner shell and an outer shell), unlike a connector configured with one layer. In the present disclosure, an electronic device 300, which is an apparatus of a base station 110 or an RU 220 using the dual layer connector is illustrated, but an embodiment of the present disclosure is not limited thereto. For example, an electronic device using the dual layer connector according to an embodiment of the present disclosure may include an apparatus that may be installed outdoors. For example, an embodiment of the present disclosure may also be applied to a connector used for a port included in an electronic device to be installed outdoors and a cable to be connected to the port, and the electronic device including the same.

Accordingly, the dual layer connector and the electronic device (e.g., the base station 110) including the same according to an embodiment of the present disclosure, may prevent a configuration of a cable from being broken in a process of connecting the cable with the port and separating (or releasing) the cable from the port. In this case, in the dual layer connector according to an embodiment of the present disclosure, even when only the outer shell is separated from the inner shell without separating the entire connector, a user may perform installation and operation of a plurality of cables exposed through an opening (e.g., a third opening 523). In this case, the plurality of cables may be in a state of being fixed by an elastic portion (e.g., an elastic portion 521) of the inner shell. In other words, the dual layer connector and the electronic device (e.g., the base station 110) including the same according to an embodiment of the present disclosure, may obtain tensile strength for the plurality of cables, thereby performing operation more conveniently.

In addition, the dual layer connector and the electronic device (e.g., the base station 110) including the same according to an embodiment of the present disclosure, by being used with respect to a plurality of cables, may reduce a size of an electronic device (e.g., the electronic device 300 or a case 305) in which a port is disposed, compared to a case in which a separate connector is used for each of the cables.

In addition, the dual layer connector and the electronic device (e.g., the base station 110) including the same according to an embodiment of the present disclosure may be applied regardless of a structure and a type of a cable, thereby securing versatility and improving productivity of the connector. In other words, a production cost and a maintenance cost of a connector according to the dual layer connector and the electronic device (e.g., the base station 110) including the same according to an embodiment of the present disclosure may be reduced compared to a single connector for a single cable/port.

In embodiments, a connector may comprise a receptacle including a first fastening portion, and a hole located to surround ports for a plurality of cables. The connector may comprise an inner shell connected with the receptacle. The connector may comprise an outer shell connected with the receptacle by surrounding the inner shell. The inner shell may include a first portion including a first opening connected with the hole of the receptacle, a second portion including a plurality of second openings through which the plurality of cables pass, and a third portion between the first portion and the second portion, the third portion in which the plurality of cables are disposed inside. The third portion may include a third opening in which the plurality of cables are exposed to the outside of the inner shell. The outer shell may include a second fastening portion spaced apart from the first fastening portion such that the outer shell is separated from the receptacle or coupled with the first fastening portion such that the outer shell is fastened to the receptacle by moving with respect to the outer shell.

According to an embodiment, the second portion may include an elastic portion including the plurality of second openings, and a third fastening portion rotatable in a state of surrounding the elastic portion.

According to an embodiment, a size of each of the plurality of second openings may be reduced as the third fastening portion rotates in a first rotation direction, or may be expanded as the third fastening portion rotates in a second rotation direction opposite to the first rotation direction.

According to an embodiment, the first portion may include a first connecting portion. The first connecting portion may be contacted with at least a portion of an inner surface of the receptacle when the inner shell is connected with the hole of the receptacle.

According to an embodiment, the second portion may include a second connecting portion. The second connecting portion may be contacted with at least a portion of an inner surface of the outer shell when the inner shell is fastened in the outer shell.

According to an embodiment, the outer shell may include a third connecting portion. The third connecting portion may be contacted with at least a portion of the inner surface of the receptacle when the outer shell is connected with the hole of the receptacle.

According to an embodiment, each of the first connecting portion, the second connecting portion, and the third connecting portion may comprise an elastic member.

According to an embodiment, the ports may be located in a region formed by the hole of the receptacle. A portion different from a portion in which the ports are disposed in the region may be formed to be longer than a defined length.

According to an embodiment, the receptacle may comprise a conductive member. A housing of the inner shell may comprise a non-conductive member. A housing of the outer shell may comprise a conductive member.

According to an embodiment, the third portion may include the third opening on at least one surface from among a plurality of surfaces connecting between the first portion and the second portion.

According to an embodiment, a shape of the outer shell may be formed to correspond to a shape of the inner shell.

According to an embodiment, the first fastening portion and the second fastening portion may include at least one of a push pull connector, a lever, or a bayonet connector.

According to an embodiment, the plurality of cables may include interfaces for connecting a radio unit (RU) and a digital unit (DU) of a base station. The ports may be located in a housing included in an apparatus of the RU.

According to an embodiment, each of the plurality of cables may include at least one of a power cable, a radio frequency (RF) cable, or a signaling cable. Each of the ports may include at least one of a power port for the power cable, an antenna port for the RF cable, or a port for the signaling cable.

According to an embodiment, the signaling cable may include at least one of an optic cable, an ethernet cable, or a remote electrical tilt (RET) cable.

In embodiments, an electronic device for a base station may comprise an apparatus for a digital unit (DU). The electronic device for the base station may comprise an apparatus for a radio unit (RU). The electronic device for the base station may comprise a connector for a connection between the DU and the RU. The connector may include a receptacle including a first fastening portion, and a hole located to surround ports for a plurality of cables. The connector may include an inner shell connected with the receptacle. The connector may include an outer shell connected with the receptacle by surrounding the inner shell. The inner shell may include a first portion including a first opening connected with the hole of the receptacle, a second portion including a plurality of second openings through which the plurality of cables pass, and a third portion between the first portion and the second portion, the third portion in which the plurality of cables are disposed inside. The third portion may include a third opening in which the plurality of cables are exposed to the outside of the inner shell. The outer shell may include a second fastening portion spaced apart from the first fastening portion such that the outer shell is separated from the receptacle or coupled with the first fastening portion such that the outer shell is fastened to the receptacle by moving with respect to the outer shell.

According to an embodiment, the second portion may include an elastic portion including the plurality of second openings, and a third fastening portion rotatable in a state of surrounding the elastic portion. A size of each of the plurality of second openings may be reduced as the third fastening portion rotates in a first rotation direction, or may be expanded as the third fastening portion rotates in a second rotation direction opposite to the first rotation direction.

According to an embodiment, the first portion may include a first connecting portion. The second portion may include a second connecting portion. The outer shell may include a third connecting portion. The first connecting portion may be contacted with at least a portion of an inner surface of the hole when the inner shell is connected with the hole of the receptacle. The second connecting portion may be contacted with at least a portion of an inner surface of the outer shell when the inner shell is fastened in the outer shell. The third connecting portion may be contacted with at least a portion of the inner surface of the hole when the outer shell is connected with the hole of the receptacle.

According to an embodiment, each of the first connecting portion, the second connecting portion, and the third connecting portion may comprise an elastic member.

According to an embodiment, the first fastening portion and the second fastening portion may include at least one of a push pull connector, a lever, or a bayonet connector.

Methods according to embodiments described in claims or specifications of the present disclosure may be implemented as a form of hardware, software, or a combination of hardware and software.

In a case of implementing as software, a computer-readable storage medium for storing one or more programs (software module) may be provided. The one or more programs stored in the computer-readable storage medium are configured for execution by one or more processors in an electronic device. The one or more programs include instructions that cause the electronic device to execute the methods according to embodiments described in claims or specifications of the present disclosure. The one or more programs may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. In the case of being distributed online, at least part of the computer program product may be temporarily generated or at least temporarily stored in the machine-readable storage medium, such as memory of the manufacturer's server, the application store's server, or a relay server.

Such a program (software module, software) may be stored in a random access memory, a non-volatile memory including a flash memory, a read only memory (ROM), an electrically erasable programmable read only memory (EEPROM), a magnetic disc storage device, an optical storage device (e.g., a compact disc-ROM (CD-ROM), digital versatile discs (DVDs), or other formats), or a magnetic cassette. Alternatively, it may be stored in memory configured with a combination of some or all of them. In addition, a plurality of configuration memories may be included.

Additionally, a program may be stored in an attachable storage device that may be accessed through a communication network such as the Internet, Intranet, local area network (LAN), wide area network (WAN), or storage area network (SAN), or a combination thereof. Such a storage device may be connected to a device performing an embodiment of the present disclosure through an external port. In addition, a separate storage device on the communication network may also be connected to a device performing an embodiment of the present disclosure.

In the above-described specific embodiments of the present disclosure, components included in the disclosure are expressed in the singular or plural according to the presented specific embodiment. However, the singular or plural expression is selected appropriately according to a situation presented for convenience of explanation, and the present disclosure is not limited to the singular or plural component, and even components expressed in the plural may be configured in the singular, or a component expressed in the singular may be configured in the plural.

According to various embodiments, one or more components or operations of the above-described components may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be executed sequentially, in parallel, repeatedly, or heuristically, or one or more of the operations may be executed in a different order or omitted, or one or more other operations may be added.

Meanwhile, specific embodiments have been described in the detailed description of the present disclosure, and of course, various modifications are possible without departing from the scope of the present disclosure.

## Claims

1. A connector comprising:
a receptacle including a first fastening portion, and a hole located to surround ports for a plurality of cables;
an inner shell connected with the receptacle; and
an outer shell connected with the receptacle by surrounding the inner shell,
wherein the inner shell includes:
a first portion including a first opening connected with the hole of the receptacle,
a second portion including a plurality of second openings through which the plurality of cables pass, and
a third portion in which the plurality of cables are disposed between the first portion and the second portion,
wherein the third portion includes a third opening in which the plurality of cables are exposed to an outside of the inner shell, and
wherein the outer shell includes a second fastening portion spaced apart from the first fastening portion such that the outer shell is separated from the receptacle or coupled with the first fastening portion such that the outer shell is fastened to the receptacle by moving with respect to the outer shell.

2. The connector of claim 1, wherein the second portion includes:
an elastic portion including the plurality of second openings, and
a third fastening portion rotatable in a state of surrounding the elastic portion.

3. The connector of claim 2, wherein a size of each of the plurality of second openings is reduced as the third fastening portion rotates in a first rotation direction, or is expanded as the third fastening portion rotates in a second rotation direction opposite to the first rotation direction.

4. The connector of claim 1, wherein the first portion includes a first connecting portion, and
wherein the first connecting portion is contacted with at least a portion of an inner surface of the receptacle when the inner shell is connected with the hole of the receptacle.

5. The connector of claim 4, wherein the second portion includes a second connecting portion, and
wherein the second connecting portion is contacted with at least a portion of an inner surface of the outer shell when the inner shell is fastened in the outer shell.

6. The connector of claim 5, wherein the outer shell includes a third connecting portion, and
wherein the third connecting portion is contacted with at least a portion of the inner surface of the receptacle when the outer shell is connected with the hole of the receptacle.

7. The connector of claim 6, wherein each of the first connecting portion, the second connecting portion, and the third connecting portion comprises an elastic member.

8. The connector of claim 1, wherein the ports are located in a region formed by the hole of the receptacle, and
wherein a portion different from a portion in which the ports are disposed in the region is formed to be longer than a defined length.

9. The connector of claim 1, wherein the receptacle comprises a conductive member,
wherein a housing of the inner shell comprises a non-conductive member, and
wherein a housing of the outer shell comprises a conductive member.

10. The connector of claim 1, wherein the third portion includes the third opening on at least one surface from among a plurality of surfaces connecting between the first portion and the second portion.

11. The connector of claim 1, wherein a shape of the outer shell is formed to correspond to a shape of the inner shell.

12. The connector of claim 1, wherein the first fastening portion and the second fastening portion include at least one of a push pull connector, a lever, or a bayonet connector.

13. The connector of claim 1, wherein the plurality of cables include interfaces for connecting a radio unit (RU) and a digital unit (DU) of a base station, and
wherein the ports are located in a housing included in an apparatus of the RU.

14. The connector of claim 13, wherein each of the plurality of cables includes at least one of a power cable, a radio frequency (RF) cable, or a signaling cable, and
wherein each of the ports includes at least one of a power port for the power cable, an antenna port for the RF cable, or a port for the signaling cable.

15. The connector of claim 14, wherein the signaling cable includes at least one of an optic cable, an ethernet cable, or a remote electrical tilt (RET) cable.
